# FASCICULE DE BREVET EUROPEEN

(11) **EP 0 969 625 B1**
(45) Date de publication et mention de la délivrance du brevet: **17.03.2010**
(21) Numéro de dépôt: 99401595.6
(22) Date de dépôt: 25.06.1999
(51) Int. Cl.: H04L 12/24

(54) **Agent de communication entre un administrateur et au moins une ressource d'un système informatique**
Kommunikationsagent zwischen einem Verwalter und mindestens einem Betriebsmittel eines Rechnersystems
Communication agent between a manager and at least one resource of a computer system

(30) Priorité: 30.06.1998 FR 9808297
(43) Date de publication de la demande: 05.01.2000
(73) Titulaire: Thomson Licensing, 92443 Issy-les-Moulineaux Cedex (FR)
(72) Inventeur: Brunet, Jean, 35830 Betton (FR); Sedrati, Gérald, 75015 Paris (FR)
(74) Mandataire: Kohrs, Martin

(56) Documents cités:
- EP-A- 0 621 705
- US-A- 5 295 244
- US-A- 5 491 796
- SPEAKER L A: "A TOOLKIT FOR DEVELOPING TMN MANAGER/AGENT APPLICATIONS" HEWLETT-PACKARD JOURNAL, vol. 47, no. 5, octobre 1996 (1996-10), pages 52-61, XP000631666
- FERIDUN M ET AL: "IMPLEMENTING OSI AGENT/MANAGERS FOR TMN" IEEE COMMUNICATIONS MAGAZINE, vol. 34, no. 9, septembre 1996 (1996-09), pages 62-67, XP000627236

## Description

La présente invention concerne un agent de communication entre un administrateur et au moins une ressource d'un système informatique. L'administrateur est aussi connu comme plate-forme d'administration. L'invention concerne aussi une librairie d'outils de création d'un agent. Un tel agent permet à un administrateur de système informatique de commander, surveiller et évaluer à distance, des ressources informatiques. L'invention a encore pour objet un procédé de communication entre un administrateur et une ressource mettant en oeuvre un agent conforme à l'invention.

Le document « Hewlett-Packard Journal » d'Octobre 1996, Volume 47, Number 5, décrit dans un article à la page 52 intitulé « A Toolkit for Developing TMN Manager/Agent Applications » (« Une boîte à outils pour développer des applications TMN pour gestion/management » en français, l'acronyme « TMN » signifiant « Telecommunications Management Network », pour « Réseau de Gestion de Télécommunications » en français), de Lisa A. Speaker, divulgue une vue globale des défis que pose le développement des applications TMN basé sur OSI (« Open Systems Interconnection » en anglais, ou « Interconnexion de Systèmes Ouverts » en français) et décrit ensuite une boîte à outils (« HP Openview Managed Object Toolkit ») qui peut être utilisée pour accélérer le développement des applications TMN.

Le document « IEEE Communications Magazine » de Septembre 1996 décrit, dans un article intitulé « Implementing OSI Agent/Managers for TMN » (« Réaliser des agents/managers OSI pour TMN » en français), que les OSI agents/managers comme définis par les standards OSI pour la gestion des systèmes jouent un rôle prépondérant dans l'architecture TMN. L'article discute les difficultés les plus importantes dans la réalisation d'agents/managers OSI et présente une architecture ainsi qu'une boîte à outils pour vaincre ces difficultés.

Le document de brevet US 5,491,796 décrit un appareil pour la gestion à distance de différentes ressources d'un réseau d'échange d'information. Un jeu cohérent d'afficheurs est fourni pour les faces-avant distantes (« remote front panels », en anglais) permettant une gestion visuelle et homogène d'appareils distants, tout en permettant l'affichage de données à caractère non-graphique dans une forme utilisable.

Il est connu dans l'art antérieur qu'un système distribué soit constitué de ressources informatiques qui peuvent être aussi bien, des mainframes, des stations de travail, des ponts, des routeurs, des imprimantes, des systèmes d'exploitation, des applications...En bref, est considérée comme ressource toute entité du système informatique.

Administrer ou manager un système distribué, c'est manager l'ensemble de ses ressources. Pour ce faire, on a recours à une plate-forme d'administration (ou manager) qui doit avoir une vision aussi complète, fine et détaillée que possible des ressources qu'elle doit administrer.

Cette vision d'une ressource est rendue possible grâce à un modèle de la ressource en question. La modélisation d'une ressource s'appuie notamment sur une approche et une structuration en objets organisés en arbre des informations de management. Le modèle d'une ressource est géré par un agent capable d'instancier ces objets à l'aide d'informations en provenance de la ressource ou de la plate-forme d'administration.

Du fait de la spécificité de chaque ressource, chaque agent doit être créé de façon individuelle pour chacune de ses ressources et doit contenir l'expertise communication avec l'administrateur, appelée également noyau protocolaire, et l'expertise du système à administrer.

Les méthodes de développement d'un agent de l'art antérieur consistent pour un programmeur à concevoir dans leur intégralité, l'expertise de communication avec l'administrateur et l'expertise de communication avec la ressource à administrer. Dans son développement, le programmeur est donc confronté à deux types de problèmes, ceux liés au protocole de communication avec l'administrateur et ceux liés au développement de l'expertise de la ressource à administrer. De plus, ces deux expertises ne sont pas dissociées dans l'agent, d'où des problèmes de performance, de robustesse, de qualité du code, de fiabilité, et de temps de développement de l'agent, car le programmeur est confronté à deux problèmes à la fois et donc, pour chaque agent développé, le programmeur doit développer systématiquement le noyau protocolaire sans pouvoir le réutiliser

La présente invention a donc pour objet, dans un premier but, de pallier les inconvénients de l'art antérieur en proposant un agent plus simple et plus rapide, de conception adaptable à différents contextes et possédant une grande fiabilité.

Ce but est atteint par l'objet de la revendication 1.

Selon une autre particularité, l'agent comprend dans une seconde interface au moins une méthode d'accès à la ressource pour communiquer avec le noyau protocolaire et mettre à jour et/ou lire au moins une valeur d'une instance du modèle de la ressource spécifique à la méthode, et pour répondre aux requêtes du noyau concernant la mise à jour d'au moins une valeur d'instance du modèle de la ressource.

Selon une autre particularité, la ressource étant modélisée sous forme d'attributs, l'accès de chaque attribut géré par l'agent peut être obtenue en un mode, soit « direct », soit « signal », défini dans un fichier de configuration <agt>.confget.

Selon une autre particularité, le fichier de configuration comporte, lorsque la méthode d'accès utilise des primitives d'interface sockets, un identifiant de la méthode qui est associée à l'instance.

Selon une autre particularité, la description formalisée de la ressource est sous forme de MIB (management information base).

Selon une autre particularité, le modèle de la ressource comprend une base de données triées construite à partir de la description formalisée de la ressource.

Selon une autre particularité, le noyau protocolaire comprend un fichier compilé contenant des données triées pour l'administration des objets spécifiques à son fonctionnement.

Selon une autre particularité, la communication entre l'administrateur et le noyau protocolaire s'effectue selon le protocole de gestion de réseau simple (SNMP: Simple Network Management Protocol) ASN1 (Abstract Syntax Notation One), par l'intermédiaire de verbes permettant les opérations de lecture d'une instance (get), de lecture de l'instance suivante (get-next), et de modification d'une instance (set).

Selon une autre particularité, la communication entre le noyau protocolaire et au moins une méthode d'accès aux ressources en mode « socket» s'effectue par l'intermédiaire de deux processus de connexion TCP/IP qui communiquent par des primitives exécutables sockets permettant de réaliser les opérations de lecture de la valeur d'une instance (readInstSock), de modification d'une instance (writelnstSock), de lecture de l'instance suivante (readNextSock), d'écriture d'une nouvelle instance, et de suppression d'une instance.

Selon une autre particularité, la communication entre deux méthodes (12) d'accès aux ressource (30) en mode « sockets » s'effectue par l'appel d'une fonction (notifymeth).

Selon une autre particularité, la communication entre le noyau protocolaire et au moins une méthode d'accès aux ressources en mode « direct » s'effectue par l'intermédiaire de tubes nommés et de primitives exécutables permettant de réaliser les opérations de lecture de la valeur d'une instance (readlnstDirect), de modification d'une instance (writelnstDirect), de lecture de l'instance suivante (readNextDirect), d'écriture d'une nouvelle instance, et de suppression d'une instance.

Selon une autre particularité, la structure de chaque message, concernant une opération sur une instance de la ressource et construit par le noyau protocolaire de l'agent à destination d'au moins une méthode, comprend un champ d'identification de l'instance, un champ correspondant à la valeur de l'instance, un code identifiant l'opération à exécuter et un code de retour indiquant si l'opération a été effectuée.

Selon une autre particularité, l'administrateur et/ou la méthode peuvent créer une instance dans le modèle de la ressource gérée par le noyau, par l'intermédiaire d'une requête envoyée au noyau contenant le verbe (SET) de modification d'une instance, sur une instance inexistante dans le modèle, la réception de cette requête par le noyau provoquant la création de l'instance.

Selon une autre particularité, l'administrateur et/ou la méthode peuvent détruire une instance dans le modèle de la ressource gérée par le noyau par l'intermédiaire d'une requête comportant le verbe de modification (SET) d'une instance, valorisant par le nom de l'instance à détruire, une instance prédéterminée et préexistante (gamDeleteObjet) du modèle de la ressource, la réception de cette requête par le noyau provoquant la destruction de l'instance.

Selon une autre particularité, le modèle de la ressource compris dans le noyau est une base de données triées selon l'ordre lexicographique du protocole SNMP.

Selon une autre particularité, le modèle de la ressource gérée par le noyau est initialisé par un fichier d'instance créé par l'utilisateur avant l'initialisation du noyau.

Selon une autre particularité, les modifications successives d'au moins une valeur d'instances du modèle de la ressource sont mémorisées dans un fichier de sauvegarde d'une taille maximale déterminée.

Selon une autre particularité, une fusion entre le fichier d'instance et le fichier de sauvegarde est effectuée avant l'initialisation du noyau, ou lorsque le fichier de sauvegarde a atteint la taille déterminée, ou lorsque l'utilisateur le désire pour d'une part, créer un nouveau fichier d'instance contenant les dernières valeurs des instances sauvegardées dans le fichier de sauvegarde et d'autre part, créer un fichier de sauvegarde vide.

Selon une autre particularité, les valeurs des instances enregistrées dans le fichier de sauvegarde sont accessibles par un utilisateur avant la fusion avec le fichier d'instance.

Selon une autre particularité, chaque ligne du fichier de sauvegarde correspond à une modification, ou une suppression, ou une création, ou une écriture d'une instance, et comprend un champ contenant le nom de l'instance, un champ contenant la valeur de cette instance, et un champ contenant l'identification du type d'opération effectuée sur cette instance.

Selon une autre particularité, avant la fusion du fichier d'instance avec le fichier de sauvegarde, ces deux fichiers sont dupliqués sur le disque dur de la ressource.

Un deuxième but de l'invention est de fournir une librairie d'outils permettant de créer un agent de communication de façon générique, simple et rapide.

Ce deuxième but est atteint par l'objet de la revendication 22.

Selon une autre particularité, la librairie comprend au moins une fonction d'aide au développement permettant à l'utilisateur de développer des méthodes de la ressource capables de communiquer avec le noyau protocolaire et/ou de mettre à jour au moins une instance du modèle de la ressource et/ou de lire au moins une instance du modèle de la ressource.

Un troisième but de l'invention est de proposer un procédé de communication entre un administrateur et une ressource mettant en oeuvre l'agent selon l'invention.

Ce but est atteint par le fait que le procédé de communication entre un administrateur et une ressource mettant en oeuvre l'agent selon l'invention comprend :
- Une première étape d'envoi d'une requête de l'administrateur vers la ressource pour lire une information de la ressource, et
- une deuxième étape de décodage de la requête par le noyau de l'agent pour déterminer l'instance correspondant à l'information désirée et le mode d'obtention de cette instance.

Selon une autre particularité, si le mode d'obtention de l'instance est le mode « direct », le noyau de l'agent construit puis envoie une requête de réponse à l'administrateur en donnant la valeur de l'instance existante dans le modèle de la ressource qu'il gère.

Selon une autre particularité, si le mode d'obtention de l'instance est le mode « signal », le noyau de l'agent construit puis envoie un message vers la méthode correspondant à l'instance pour obtenir la valeur de l'instance.

L'invention a encore pour objets corollaires un système informatique incluant au moins un agent conforme à l'invention, ainsi qu'un support d'enregistrement de données, tel qu'un disque magnétique ou un cédérom, incorporant un programme informatique pour la mise en oeuvre d'un agent conforme à l'invention et/ou d'une librairie d'outils telle que définie précédemment, et/ou du procédé défini précédemment pour la création d'un agent conforme à l'invention.

D'autres particularités et avantages de la présente invention apparaîtront plus clairement à la lecture de la description ci-après faite en référence aux dessins annexés dans lesquels :
- la figure 1 représente un schéma des relations qui existent entre un administrateur, un agent et une ressource d'un système informatique.
- la figure 2 représente un schéma général des communications entre un administrateur, l'agent selon l'invention et une ressource informatique en mode d'interface sockets.
- la figure 3 représente le schéma de l'opération de fusion du fichier d'instance et du fichier de sauvegarde.
- les figures 4A à 4E représentent les logigrammes du traitement par l'agent des différentes commandes d'un administrateur.

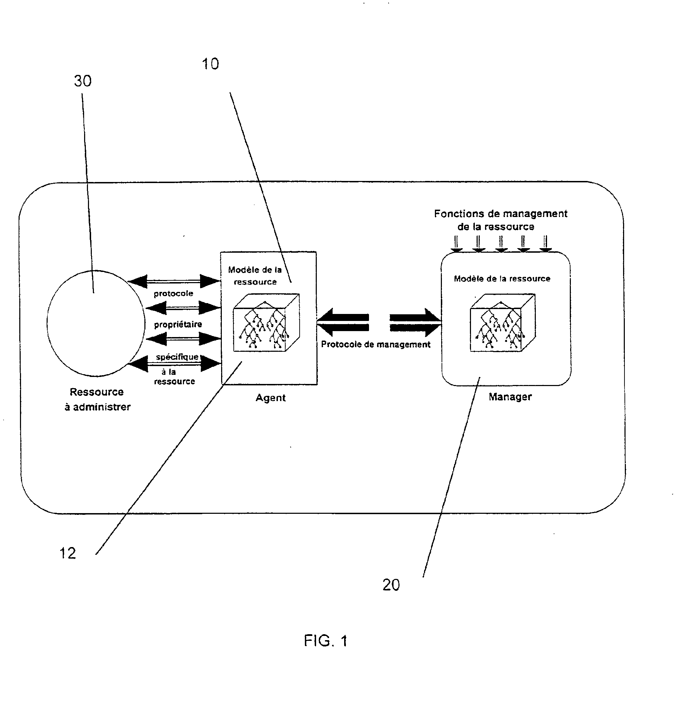

La figure 1 représente un schéma des relations qui existent entre un administrateur, un agent et une ressource d'un système informatique. La présente invention concerne un agent (10) de communication entre un administrateur (20) (ou manager) et une ressource (30) du système à administrer. Un administrateur (20) de système informatique doit être capable de superviser l'ensemble des ressources (30) d'un système et cela bien que les ressources soient situées à distance. Pour cela, l'administrateur ne fait pas directement appel à la ressource à administrer, mais utilise un modèle (11) organisé en base de données triées de cette ressource. La qualité du modèle d'une ressource en vue de l'administrer constitue une étape importante. La qualité de service disponible sur la plate-forme d'administration pour manager le système informatique et en particulier la ressource, dépend directement de la qualité, du degré de finesse et de la richesse du modèle conçu.

L'importance du rôle de l'agent est donc ici mise en évidence, puisque c'est l'agent qui est chargé d'entretenir et d'animer le modèle de la ressource.

L'agent, dont il est question dans la présente invention, est un agent du protocole de gestion d'un réseau simple (agent SNMP). Le protocole SNMP, qui est le dialogue entre un administrateur et une ressource, s'effectue selon le protocole le plus répandu dans les plates-formes d'administration de système. Dans une vision très schématique, on peut découper un agent SNMP en couches standards de communication et en couches amenant des facilités pour encoder et décoder des syntaxes, et manipuler des objets.

Les objets (ou quanta d'information) sont disponibles à travers ce qu'on appelle une base d'information (MIB :Management Information Base) qui est en quelque sorte une base de données virtuelle modélisant la ressource à administrer. Par abus de langage, on dit souvent qu'un agent gère une MIB.

Un agent contient aussi et avant tout :
- du code pour gérer le modèle de management de la ressource à manager, appelé noyau protocolaire ;
- de l'expertise sur la ressource sous forme d'automates (suivant la richesse du modèle géré par l'agent).

Ainsi, dans un agent, du code et de l'expertise spécifiques sont donc associés à chaque ressource à manager.

Les opérations disponibles à travers le protocole de management SNMP, et permettant à l'agent de manipuler les objets de la MIB qu'il gère, sont les suivantes :
- lecture d'un objet (get)
- lecture de l'objet suivant (get-next)
- écriture d'un objet (set)

Précisons encore que plutôt que les objets, qui sont en fait des canevas (templates) ou formulaires, ce sont les instances de ces objets qui sont manipulées par le protocole SNMP et l'agent.

Pour instancier les objets de la MIB qu'il gère, un agent doit aller chercher les informations directement dans la ressource physique par le biais de méthodes, qui sont des procédures associées à un objet particulier, et déclenchées à chaque fois que l'on désire réaliser une opération sur l'objet en question. Ce sont par ces méthodes que les instances de la MIB prennent une valeur sémantique : selon la manière avec laquelle on ira chercher dans la ressource physique la valeur d'une instance, cette instance aura tel ou tel sens, telle ou telle fonction.

L'agent selon l'invention présente la particularité de comprendre un noyau protocolaire élaboré automatiquement, par l'intermédiaire d'outils décrits ultérieurement, à partir de données spécifiques à la ressource à administrer. Ces données spécifiques sont fournies sous la forme d'une MIB. Le noyau créé assume l'émission et la réception des trames SNMP du et vers l'administrateur, l'encodage / décodage selon la norme ASN.1 de ces trames, ainsi que l'accès aux objets de la MIB. Ainsi, il n'est plus nécessaire pour le développeur d'un agent selon l'invention de concevoir, ce qui correspond au noyau protocolaire, il lui suffit d'élaborer la MIB correspondant à la ressource qu'il souhaite administrer grâce à l'agent. Avantageusement, la syntaxe utilisée pour élaborer la MIB est une syntaxe ASN.1-SNMP V1.

Le noyau, et donc l'agent, ainsi créé, est spécifique à la ressource mais le processus de création est générique. Ainsi en modifiant les données fournies en entrée du processus de création du noyau protocolaire, on obtient un nouvel agent.

La MIB ne contient que des informations lexicales et syntaxiques de la ressource décrivant les objets de la ressource, mais ne contient pas d'informations sémantiques. Le modèle de la ressource issu de la MIB est construit dans le noyau sous la forme d'une base de données triées selon l'ordre lexicographique. Cette base de données triées contient les valeurs des objets de la ressource administrée par l'agent. Pour élaborer cette base de données triées, l'utilisateur doit également fournir en entrée du processus de création un fichier d'instance qui va permettre d'initialiser cette base de données triées. En effet, comme il a été précisé, la MIB ne contient pas d'informations sémantiques, il est donc nécessaire, pour donner un sens aux informations de la MIB, de fournir au processus de création, des instances initiales pour la base de données triées.

Le noyau protocolaire de l'agent selon l'invention ainsi créé permet alors l'exécution, par l'administrateur en parfaite conformité avec la norme SNMP, des primitives suivantes :
GET consultation d'une instance d'un attribut ;
GET-NEXT consultation de l'instance d'attribut suivante dans un ordre lexicographique ;
SET modification d'une instance d'attribut.

Ces primitives sont supportées par les unités de données de protocole (PDU : Protocole Data Unit) :
- snmp-get-request
- snmp-get-next-request
- snmp-set-request
- snmp-get-response

De plus, l'agent selon l'invention permet l'émulation de verbes qui n'appartiennent pas originellement à la norme SNMP, mais qui, de par leur utilisation fréquente dans le management des systèmes distribués, ont été introduits dans d'autres protocoles, comme par exemple le protocole commun de gestion d'information (CMIP : Common Management Information Protocol). Il s'agit des primitives :
CREATE création d'une instance dans une table;
DELETE suppression d'une instance dans une table.

Ces deux nouvelles primitives sont supportées par les PDU :
- snmp-set-request
- snmp-get-response.

Afin de réaliser la fonction de suppression d'une instance de la table correspondant à la base de données triées, un attribut spécifique (gamDeleteObject) est ajouté lors du processus de création de l'agent. Pour détruire une instance, il suffit de valoriser cet attribut (gamDeleteObject), par l'intermédiaire de la commande SET, avec le nom de l'instance à détruire.

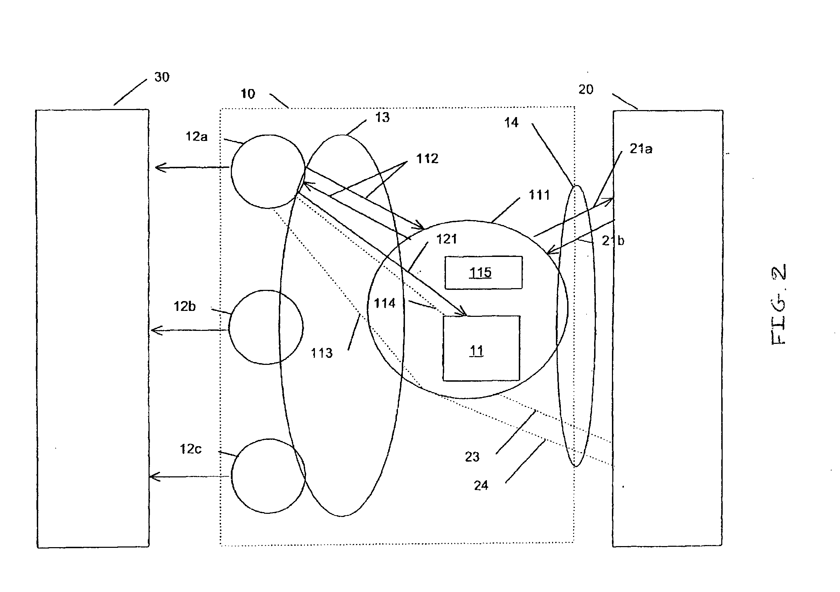

Pour ce faire, l'agent selon l'invention comporte une deuxième base de données triées (115, fig. 2) pour l'administration des objets spécifiques à son fonctionnement. Cette deuxième base de données triées regroupe des attributs qui sont utilisés, notamment pour supprimer une instance de la première base de données triée (11, fig. 2), mais également des attributs utilisés, dans le processus d'initialisation de l'agent, dans le processus de sauvegarde incrémentale, et dans le processus de communication entre méthodes qui seront décrits ultérieurement. La liste ci-dessous donne des exemples d'attributs et leur utilisation contenue dans la deuxième base de données triées:

Un premier attribut « gamlnit-<nom_agent>.0 » est utilisé lors de la synchronisation entre le noyau et la méthode de l'agent <nomAgent>, lors des phases d'initialisation et de lancement d'une fusion. Il peut prendre les valeurs suivantes : COREBEGIN, COREEND, METHBEGIN, METHEND, FUSION.

Un deuxième attribut « gamDeleteObject-<nom_agent>.0 » est utilisé pour la suppression d'une instance dans une table de l'agent <nomAgent>. Sa valeur correspond à l'attribut de l'instance à supprimer.

Un troisième attribut « gamHostName-<nom_agent>.0 » est positionné automatiquement par le noyau de l'agent OAT lors de son initialisation et prend comme valeur le nom de la machine sur laquelle l'agent <nomAgent> est implanté.

Un quatrième attribut gamNotify-<nom_agent>.0 est positionné pour les communications entre méthodes en interface sockets , on indique dans le champ « result » l'identifiant de la méthode destinataire et l'attribut prend comme valeur l'information à transmettre à une autre méthode.

De façon avantageuse, à ce stade du développement de l'agent, celui-ci est déjà capable de répondre aux interrogations de l'administrateur. En effet, le noyau comprend, d'une part une description d'une ressource à administrer par l'intermédiaire de la base de données triées, initialisée par un fichier d'instance, bien que la ressource ne soit pas nécessairement présente, et d'autre part le protocole de communication avec l'administrateur. Certes, la ressource virtuelle est figée, puisque les informations de la base de données triées ne sont pas mises à jour par une ou des méthodes. Mais l'agent ainsi créé peut être utilisé à des fins de simulation. Un des intérêts de cette simulation est de pouvoir alors développer sur la plate-forme de management des fonctions d'administration portant sur une ressource virtuelle. Ces fonctions communiquent avec un agent exactement de la même manière qu'elles le feraient en disposant effectivement de la ressource. Ceci permet de modulariser la chaîne de liaison entre un manager et une ressource administrée, ou d'accélérer la réalisation d'une solution complète d'administration en parallélisant les développements, ou de réaliser des tests de charges et de performances en multipliant le nombre d'agents simulés...

Bien entendu, le but de l'agent selon l'invention consiste également à gérer des ressources réelles. Pour cela, l'agent comprend également de l'expertise de la ressource à administrer sous forme de méthodes qui permettent l'instanciation du modèle de la ressource constituée par la base de données triées du noyau. La nature des méthodes est indifférente : elles peuvent être par exemple aussi bien des exécutables, des fonctions du système d'exploitation, des listes d'interpréteur (scripts shell), des procédures interprétées ou compilées... Elles tourneront en continu ou seront lancées périodiquement en interrogeant la ressource physique afin d'alimenter les bases de données triées du noyau. Les méthodes ont simplement pour fonction de mettre à jour la base de données triées du noyau en venant réaliser des opérations d'écriture ou de lecture dans cette base. Ces méthodes sont conçues de façon individuelle par le développeur de l'agent selon l'invention. Pour l'assister dans cette conception une librairie d'outils OAT est mise à la disposition du développeur. Cette librairie d'outils comprend des fonctions ou primitives, par exemple sous forme d'exécutables, qui permettent à la méthode de réaliser, dans la base de données triées du noyau, les opérations de lecture de la valeur d'une instance (readInstSock ou readlnstDirect), d'écriture d'une nouvelle instance (writelnstSock ou writelnstDirect), de modification de la valeur d'une instance (writelnstSock ou writelnstDirect), de suppression d'une instance (writelnstSock ou writelnstDirect), de lecture de l'instance suivante (readNextSock ou readNextDirect), mais également des fonctions d'initialisation de la méthode (connectSock ou mehtlnit), des fonctions d'échanges d'informations entre méthodes (notifyMeth) et des fonctions de communication avec le noyau protocolaire (receiveSock ou readPipe, writeRespSock ou writeResp).

Afin de permettre les opérations d'écriture et de lecture des méthodes dans la base de données triées du noyau ainsi que les sollicitations des méthodes pour le noyau protocolaire, une interface de communication existe entre le noyau et les méthodes. Il y a deux types d'interfaces de communication possibles: une interface établissant un processus de communication de type sockets, dite interface sockets, ou une interface utilisant des tubes (pipe) nommés, dite interface directe.

La figure 2 représente un schéma général des communications entre un administrateur, l'agent et une ressource informatique en mode d'interface sockets. Dans le mode d'interface sockets, le noyau (111) de l'agent (10) communique directement avec au moins une méthode (12a, 12b, 12c), par exemple par l'intermédiaire de sockets (112) de protocole de contrôle de communication/protocole Internet (sockets TCP/IP: sockets Transmission Control Protocol/Internet Protocol). L'envoi d'un message dans un socket (112) indique l'opération à réaliser, l'instance concernée et éventuellement sa valeur ainsi qu'un code de retour. Ce mode est choisi lors du processus de création de l'agent. De plus afin d'améliorer encore les performances de l'agent (10) selon l'invention, deux politiques d'obtention de l'information sur la ressource sont proposées dans ce mode. Lors d'une lecture d'une information (GET) ou d'une lecture d'une information suivante (NEXT) par l'administrateur, la valeur de l'instance demandée peut être, dans un premier mode, recherchée directement dans la base de données triées (11) du noyau (111) pour des attributs relativement statiques dans le système. Dans le premier mode, la valorisation de ces attributs est laissée à l'instigation de la méthode (12), ceci correspondant au mode d'obtention « direct ». Dans un deuxième la valeur de l'instance est renvoyée par la méthode (12) pour des attributs dynamiques. Si dans ce deuxième mode, la méthode (12) ne peut répondre avant l'expiration d'un délai déterminé (timeOut) ou si elle est absente, le noyau (11) répondra soit par une erreur générique SNMP, soit par la précédente valeur contenue dans sa base de données triées (11) (selon l'option choisie dans la construction de l'agent lors du processus de création de l'agent), ceci correspondant au mode d'obtention « signal ».

Le choix de l'une ou l'autre politique se fait grâce à un fichier d'initialisation (<agt>.confget) dans lequel on précise pour chaque attribut géré par l'agent le mode d'obtention de sa valeur : « direct » ou « signal ». En fonction de ces choix, l'outil OAT de construction d'agent définit en plus du noyau protocolaire deux interfaces de programmes aplplicatifs appelées ordinairement interfaces API (application programming interface), à savoir une interface API (13) de communication vers les méthodes et une interface API (14) de communication avec l'administrateur. Si l'utilisateur n'a pas indiqué la politique à appliquer pour un attribut, il est par défaut recherché directement dans les bases de données triées du noyau de l'agent selon l'invention. Il en va de même si le fichier d'initialisation est vide ou inexistant. Les principaux avantages apportés par le mode de communication sockets sont la possibilité de lier par un dialogue plusieurs méthodes distinctes avec le même noyau et la possibilité de déporter une ou plusieurs méthodes sur une (des) machine(s) différente(s) de celle où tourne le noyau.

De plus, l'interface sockets repose sur l'utilisation d'éléments de communication TCP/IP. Ce mode garantit une meilleure synchronisation des échanges entre le noyau (111) et la (ou les) méthode(s) (12). De plus il assouplit la tâche du développeur de méthodes en simplifiant les mécanismes d'initialisation et de surveillance.

On peut distinguer, dans les communications réalisées entre le noyau (111) et les méthodes (12) d'un agent (10) selon l'invention, deux types d'échanges : les échanges protocolaires, ce sont les échanges mis en oeuvre à l'initiative du noyau (111), suite à une requête SNMP provenant du manager (20), et les échanges méthodes, ce sont les échanges mis en oeuvre à la demande d'une méthode (12), d'une part lorsque la ressource (30) gérée par l'agent selon l'invention modifie un indicateur qui la caractérise, et d'autre part lorsqu'une méthode (12) a besoin de consulter la valeur d'une instance gérée par le noyau (111). Il existe donc pour chaque méthode, deux sockets (112, 121), à savoir un socket (112) pour les messages SNMP et un socket (121) pour les messages de méthode. Le noyau, quant à lui, crée deux sockets d'écoute, chacun sur un port TCP distinct. La connexion d'une méthode (12) engendre pour le noyau (111) l'ouverture de deux sockets (112, 121) de service (chacun associé à un socket d'écoute), sur lesquelles circuleront respectivement les messages SNMP à destination de cette méthode et les messages méthodes émis par cette dernière. Tous les échanges protocolaires entre le noyau (111) de l'agent (10) et les méthodes (12) sont réalisés à l'aide de sockets réseaux connectés, c'est-à-dire supportés au niveau transport par la couche TCP. Des primitives de lecture et d'écriture dans les sockets sont mis à disposition du développeur de la méthode.

Les échanges protocolaires sont provoqués par une requête (21a, 22) de l'administrateur (20) qui souhaite, premièrement, lire une information de la ressource (30). La trame envoyée par l'administrateur (20) est décodée par le noyau (111) protocolaire qui identifie l'instance désirée et le mode d'obtention « direct » ou « signal », de cette instance. Si le mode « direct » est détecté (21a), le noyau construit et envoie la réponse (21b) en allant chercher l'instance dans la base de données triées (11). Si le mode « signal » est détecté (22), le noyau (111) identifie la méthode (12) correspondant à l'instance souhaitée, construit un message compréhensible de la méthode (12) et l'envoie par un socket (113) à celle-ci. Ce message est compris par la méthode (12) grâce à une fonction de réception particulière (receiveSock). La méthode (12a) sollicitée va chercher l'instance souhaitée sur la ressource (30) et répond au noyau (111) par la fonction d'écriture (writeRespSock) contenant la valeur de l'instance. La réponse (114) de la méthode (12a) entraîne la mise à jour par l'agent de la base de données triées (11) ainsi que la construction et l'envoi, par le noyau (111), d'un message (23) contenant l'instance demandée par l'administrateur (20). Les échanges protocolaires sont provoqués lorsque l'administrateur souhaite, deuxièmement, modifier une instance de la ressource (30). La trame (22) envoyée par l'administrateur (20) est alors décodée par le noyau (111) qui identifie la méthode (12) concernée et construit un message (113) à destination de cette méthode (12) pour modifier la valeur de l'instance sur la ressource. La méthode (12) reçoit le message par la fonction de réception (receiveSock), exécute la modification et répond (114) au noyau (111). La réponse de la méthode provoque la mise à jour de la base de données triées (11), ainsi que la construction et l'envoi d'un message de réponse (23) vers l'administrateur (20) indiquant que la modification a été effectuée. La structure de tous les messages construits par le noyau (111) à destination de la méthode (12) comprend :
- l'identification de l'instance
- un champ correspondant à la valeur de l'instance
- un code d'opération
- un code retour.

Dans le cas d'une demande de lecture d'instance ou d'une demande de lecture de l'instance suivante, le code opération est GET. Le champ correspondant à la valeur de l'instance est vide pour le message du noyau à la méthode et est égal à la valeur capturée par la méthode dans le message de la méthode au noyau. Le code retour est, soit OK, si la méthode est capable de trouver la valeur, soit NOK, dans le cas contraire. Si le noyau reçoit de la part de la méthode un message avec un code retour NOK, celui-ci construit un message d'erreur vers l'administrateur et annule la requête. La gestion de la fonction GET-NEXT venant de l'administrateur est laissée à l'initiative du noyau, c'est-à-dire que la méthode ne reçoit du noyau (111) que des commandes GET, et que c'est le noyau qui détermine l'instance suivante pour construire son message GET à destination de la méthode.

Dans le cas d'une demande de modification d'instance, le code opération est SET, le champ correspondant à la valeur de l'instance est égal à la valeur souhaitée. Le code retour est, soit OK, si la méthode est capable de trouver l'instance et de la modifier, soit NOK, dans le cas contraire. Si le noyau reçoit de la part de la méthode un message avec un code retour NOK, celui-ci construit un message d'erreur vers l'administrateur et annule la requête.

Lorsqu'une requête de modification (SET) ou de création (CREATE) porte sur plusieurs attributs, le noyau soumet un à un ces attributs à la méthode. Dès que cette dernière renvoie un code NOK, une réponse avec une erreur générique SNMP est renvoyée au manager. Ainsi, il est vivement conseillé au développeur d'une méthode nécessitant le positionnement de plusieurs attributs d'une instance, avant d'effectuer la création ou la modification de cette instance, de répondre par un code retour OK pour tous les attributs sauf le dernier, puis de juger de la possibilité de création ou de modification avec la connaissance complète qu'apporte cette dernière instance, avant de renvoyer un accord (OK) ou un refus (NOK) au noyau de l'agent OAT.

De plus, la satisfaction complète du protocole SNMP a été améliorée, en respectant l'atomicité de bout en bout lors d'une requête SNMP portant sur un ensemble d'attributs. L'atomicité consiste à traiter tous les attributs, si toutes les modifications sont possibles, ou à ne traiter aucun attribut si l'une des modifications n'est pas possible. Pour ce faire, le noyau de l'agent transmet toujours, une à une, à la méthode les instances contenues dans une même trame SNMP-SET mais en différenciant la dernière instance, grâce au code de l'opération transmis à la méthode, qui dans ce dernier cas est SETLAST.

Ainsi, l'agent selon l'invention permet de mettre en pratique une atomicité complète des requêtes SNMP-SET venant de l'administrateur (20). Cette atomicité de bout en bout de la chaîne de liaison est explicitée dans l'exemple suivant :
1. l'administrateur envoie une trame SNMP-SET sur les instances a, b et c ;
2. le noyau de l'agent reçoit cette trame a, b, c ;
3. le noyau de l'agent transmet à la méthode un SET sur l'instance a ;
4. la méthode répond OK pour a au noyau de l'agent ;
5. le noyau de l'agent transmet à la méthode un SET sur l'instance b ;
6. la méthode répond OK pour b au noyau de l'agent ;
7. le noyau de l'agent transmet à la méthode un SETLAST sur l'instance c ;
8. la méthode vérifie la possibilité de modifier a, b et c
9. la méthode répond OK ou NOK pour c au noyau de l'agent ;
10. le noyau de l'agent met ou ne met pas à jour ses bases de données ;
11. le noyau renvoie une trame SNMP-NOERROR ou SNMP-ERROR au manager ;
12. la méthode, si elle a mis à jour ses variables INTERNES ou effectué des opérations sur les ressources qu'elle contrôle concernant les instances a et b, doit les conserver ou les annuler.

Alors que toutes les autres instances sont transmises habituellement avec un code d'opération valant SET, la dernière parvient à la méthode avec un code d'opération égal à SETLAST. La méthode (12) est donc construite pour réagir différemment en fonction du code opération que lui transmet le noyau (111). Lorsque le noyau transmet un code opération de modification sur un attribut, la méthode lit le code opération du message. Si le code opération correspond à un SET, la méthode vérifie la possibilité de modifier cet attribut, mémorise, dans un fichier ou un registre, le résultat de la modification et répond au noyau par un code de retour OK. Si le code opération correspond à un SETLAST, la méthode vérifie la possibilité de modifier le dernier attribut et contrôle que toutes les modifications mémorisées sont possibles. Si l'une des modifications est impossible ou si la modification du dernier attribut est impossible, la méthode transmet un code de retour NOK, dans le cas contraire la méthode répond par un code de retour OK. Le code de retour NOK au code opération SETLAST provoque l'annulation de la requête toute entière. Le code de retour OK provoque la validation, dans le modèle (11) de la ressource du noyau (111), de toutes les modifications mémorisées par la méthode.

Les échanges méthodes se font selon le même mécanisme que les échanges protocolaires : par le biais d'envois de message dans un « socket » TCP/IP. L'envoi du message est géré dans les fonctions et primitives mises à la disposition du développeur et décrites postérieurement. Ainsi, la méthode peut aller écrire (writelnstSock) de nouvelles valeurs dans les bases de données triées du noyau (11, 115), ce qui lui permet de créer, modifier ou supprimer des instances. De même, elle peut, bien entendu, lire (readInsitSock) la valeur d'une instance particulière dans ces bases. Il est également possible pour la méthode de lire dans les bases internes (11, 115) du noyau, l'instance suivante dans l'ordre lexicographique (readNextSock). Ceci permet, par exemple, à la méthode de lire l'intégralité des instances d'une table.

Le noyau, lorsqu'il est initialisé, se met en écoute sur une liste de sockets. Lorsqu'aucune méthode n'est encore connectée, les sockets qui font partie de cette liste d'écoute sont le socket d'écoute méthode et le socket Unité de donnée de protocole (UDP). Lorsqu'une méthode se connecte, un événement se produit sur le socket d'écoute méthode, dès lors le noyau ouvre un socket de service méthode et attend la connexion de la méthode sur le socket d'écoute SNMP. Cette connexion étant réalisée, le noyau ouvre un socket de service SNMP. Puis, il reprend son écoute en ajoutant le nouveau socket de service méthode à la liste d'écoute. La déconnexion d'une méthode entraîne la fermeture des deux sockets de service qui lui sont associés et le retrait de le socket de service méthode de la liste d'écoute. Lorsqu'un message (writelnstSock, readInstSock, readNextSock ou notifyMeth) arrive sur un socket de service méthode, le noyau traite la requête avant de reprendre son attente sur la liste d'écoute.

Le mode interface sockets permet de faire cohabiter plusieurs méthodes avec le noyau de l'agent. Ce dernier doit donc savoir à quelle méthode il doit transmettre une requête provenant du manager. Pour ce faire, on introduit la notion d'identifiant de méthode. Cet identifiant est un entier qui permet de distinguer de manière unique une méthode. Le choix de cet entier et son unicité pour un même noyau est laissé à l'initiative du développeur de l'agent. On indique pour chaque attribut dans le fichier <agt>.confget, l'identifiant de la méthode gérant cet attribut. Ainsi, la distribution d'une requête SNMP vers telle ou telle méthode se fait en fonction de l'attribut sur lequel porte la requête. Lors de l'initialisation d'une méthode, celle-ci déclare au noyau son identifiant de manière à ce que ce dernier sache à quelle méthode correspond tel socket de service SNMP. Cette déclaration est directement réalisée dans la fonction d'initialisation de la méthode (connectSock).

La description qui va suivre concerne plus précisément le mode de communication par interface directe entre le noyau protocolaire et la méthode. Dans le mode d'interface directe, la communication entre le noyau et la méthode est réalisée par l'intermédiaire de tubes nommés. L'envoi d'un message dans un tube est couplé avec l'émission d'un signal de manière à avertir l'interlocuteur (noyau ou méthode) qu'un message lui est destiné. Ce mode impose que le noyau ne communique qu'avec une seule méthode. Le principe du mode interface directe ne diffère que très peu du mode sockets, sinon bien entendu dans les ressources de communication inter processus mises en jeu. Dans le mode direct, tous les échanges protocolaires entre le noyau de l'agent et la méthode sont réalisés à l'aide de tubes (pipe) nommés et d'envoi d'un signal SIGUSR2. Les tubes nommés utilisés pour ces échanges protocolaires, sur les requêtes GET, NEXT, SET, CREATE ou DELETE sont, d'une part, <pipesDir>/<agtName>.pRespSnmp, et d'autre part ,<pipesDir>/<agtName>.pReqSnmp. Le premier tube est créé par le noyau de l'agent selon l'invention et ouvert en écriture par la méthode pour transmettre les réponses aux requêtes SNMP (fonction writeResp). Le second tube est créé et ouvert par la méthode en lecture pour recevoir les requêtes SNMP provenant du noyau de l'agent.

L'utilisation du signal SIGUSR2 permet, tant au noyau de l'agent qu'à la méthode, de se consacrer à d'autres tâches. Chaque écriture dans un tube est suivie d'un envoi du signal SIGUSR2 qui avertit le destinataire qu'un message vient de lui être transmis. La méthode et le noyau de l'agent peuvent bien entendu fonctionner l'un sans l'autre. Ceci est réalisé grâce à l'ouverture des tubes dans un mode non bloquant.

Lors des échanges avec une méthode en mode interface directe, le noyau ne renvoie pas de signal à la méthode lors d'une réponse à un readlnstDirect ou readNextDirect, ce qui permet au processus méthode de disposer du signal SIGUSR1 pour d'éventuelles interceptions indépendantes de l'agent.

Les tubes nommés utilisés pour ces échanges méthodes, sur les requêtes d'instance READINST, READNEXT ou WRITEINST, sont, d'une part, <pipesDir>/<agtName>.pReqMeth, et, d'autre part, <pipesDir>/<agtName>.pRespMeth. Le premier tube est créé par le noyau de l'agent et ouvert en écriture par la méthode pour transmettre des requêtes d'instance (fonctions readlnstDirect, readNextDirect et writelnstDirect) au noyau. Le second tube est créé et ouvert en lecture par la méthode pour recevoir du noyau de l'agent les réponses aux requêtes readlnstDirect et readNextDirect.

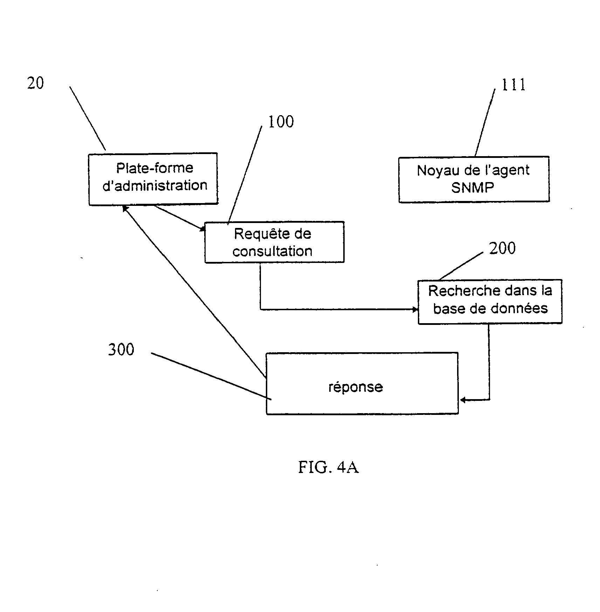

Les figures 4A à 4E représentent des logigrammes du traitement des différentes commandes d'un administrateur. La figure 4A représente le logigramme d'une requête de consultation d'instance par l'administrateur (20) dans le mode d'obtention « direct » de l'instance. L'administrateur (20) envoie vers l'agent (10) une requête (100) de consultation. Le noyau (111) de l'agent cherche (200) la valeur de l'instance dans la base de données triées et répond (300) à l'administrateur, soit par la valeur de l'instance demandée, soit par un message d'erreur si l'instance n'existe pas.

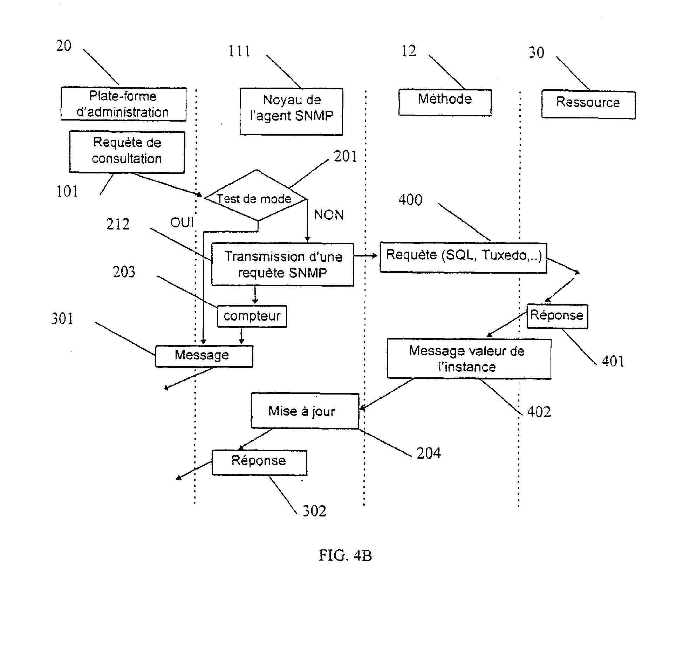

La figure 4B représente le logigramme d'une requête de consultation d'instance par l'administrateur dans le mode d'obtention « signal ». L'administrateur (20) envoie vers l'agent une requête (101) de consultation « GET » d'une instance ou de consultation de l'instance suivante « GET-NEXT ». L'agent effectue alors un test (201). Si le noyau (111) est en mode MUTE, décrit ultérieurement, un message (301) donnant la dernière valeur contenue dans la base de données triées est envoyé au manager (20). Dans le cas contraire, le noyau (111) transmet un message de consultation (202) de l'instance à la méthode (12) et déclenche un compteur (203) de temps « TIMEOUT » écoulé. Si la méthode (12) ne répond pas avant que le compteur (203) atteigne une valeur déterminée, le noyau (111) envoie un message (301) à l'administrateur contenant la dernière valeur de l'instance contenue dans la base de donnée. Dès la réception du message (202), la méthode (12) va interroger par une requête (400) la ressource (30) pour connaître la valeur de l'instance. La ressource envoie alors une requête (401) à la méthode (12). Celle-ci transmet alors un message (402) contenant la valeur de l'instance au noyau (111). Le noyau (111) effectue une mise à jour (204) de la base de données triées (11) avec la valeur transmise par la méthode, et envoie une réponse (302) à l'administrateur.

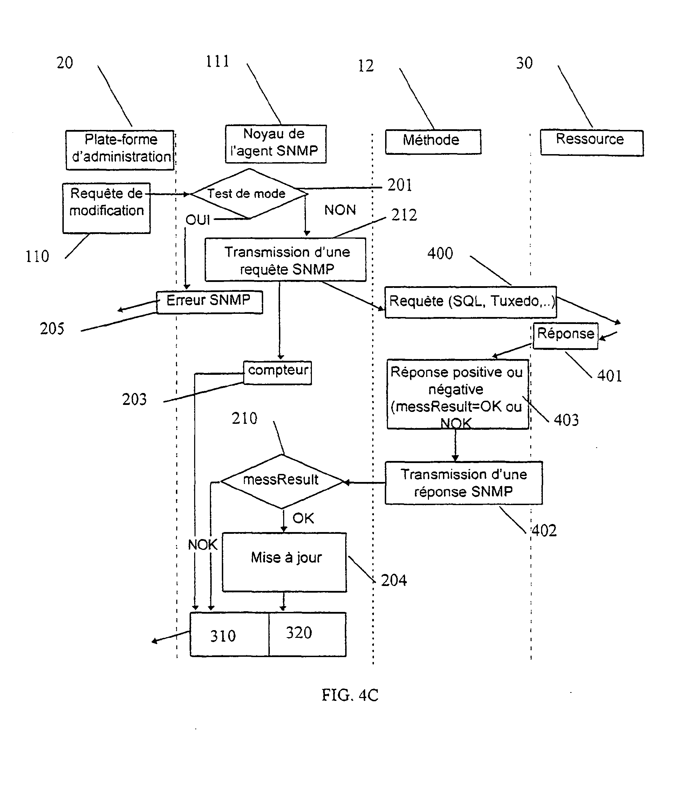

La figure 4C représente le logigramme d'une requête de modification d'instance de l'administrateur. L'administrateur (20) envoie une requête de modification (110) au noyau (111). L'agent effectue alors un test (201) pour déterminer s'il est en mode MUTE. Si le noyau est en mode MUTE, décrit ultérieurement, le noyau répond à l'administrateur (20) par un message (205) d'erreur, dans le cas contraire, le noyau (111) transmet un message de modification (212) de l'instance à la méthode (12) et déclenche un compteur (203) de temps écoulé « TMEOUT ». Si la méthode (12) ne répond pas avant que le compteur (203) atteigne une valeur déterminée, le noyau (111) envoie un message (310) d'erreur à l'administrateur. Dès la réception du message, la méthode (12) va interroger, par une requête (400), la ressource (30) pour modifier la valeur de l'instance. La ressource envoie un réponse (401) à la méthode (12), indiquant, par un code (403) résultat (OK ou NOK) si la modification est possible ou non. La méthode (12) transmet au noyau (111), un message (402) contenant le code résultat. Le noyau (111) effectue alors un test sur la valeur du code résultat. Si la valeur du code est OK, le noyau (111) effectue une mise à jour (204) de la base de données triées (11) et transmet une réponse (320) à l'administrateur (20), indiquant que l'instance a été modifiée. Si la valeur du code résultat est NOK, le noyau (11) répond à l'administrateur par un message (310) d'erreur.

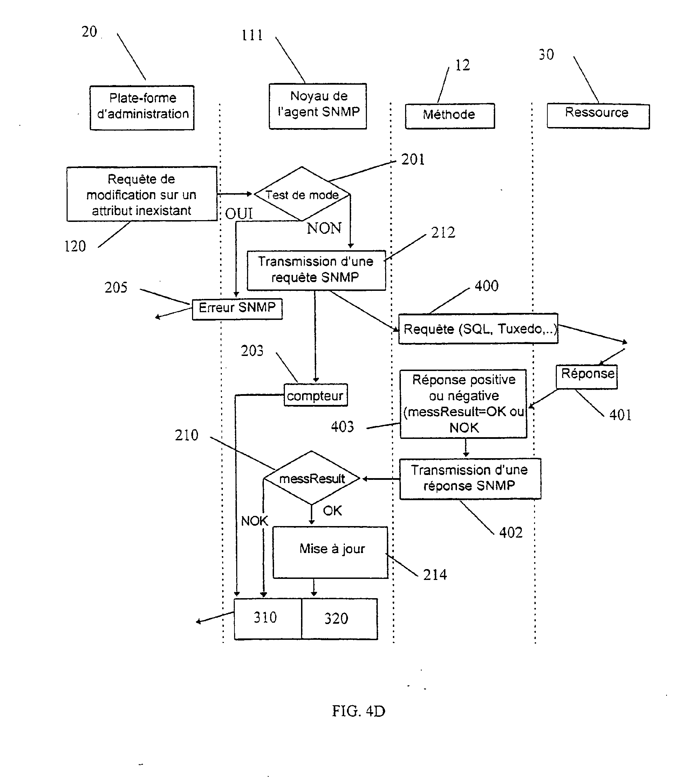

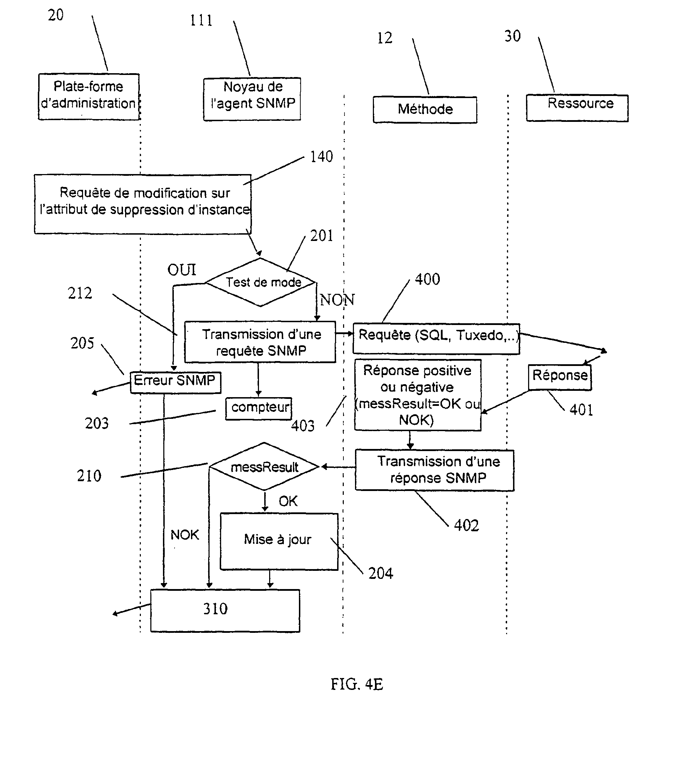

Les figures 4D et 4E représentent un logigramme de création d'instance et un logigramme de destruction d'instance de l'administrateur. Ces logigrammes sont rigoureusement identiques au logigramme décrit en liaison avec la figure 4C, hormis la nature du message initial envoyé par l'administrateur. Pour la requête de création d'une instance (fig. 4D), le message est en fait constitué par une requête de modification sur une instance qui n'existe pas. Pour la requête de suppression d'une instance (fig. 4E), le message est en fait constitué par une requête de modification d'une instance particulière (gamDeleteObjet) de la base de données du noyau. La modification consiste à valoriser cette instance particulière par le nom (OID) identifiant l'objet de l'instance à supprimer.

Avantageusement, l'agent selon l'invention permet de garder une trace de toutes les modifications qui sont intervenues sur la base de données triées (11) du noyau protocolaire. La capitalisation des informations de management ne constitue pas habituellement le rôle d'un agent SNMP. Cependant, l'agent selon l'invention met en oeuvre cette fonctionnalité supplémentaire dans un souci d'éviter au mieux toute perte d'information quelle qu'elle soit. La sauvegarde incrémentale est bien entendu implantée dans les deux modes : interface directe et interface sockets. Plutôt qu'archivage, il sera préféré désormais le terme de sauvegarde incrémentale. En effet, les informations sont stockées sur le disque dur du système au fur et à mesure qu'elles sont modifiées et non plus à intervalles prédéterminés. Ainsi, les requêtes donnant lieu à une modification des bases de données triées (111) du noyau (11) de l'agent selon l'invention sont consignées dans un fichier, appelé fichier incrémental. Le tableau ci-après récapitule les différentes requêtes qui peuvent être transmises au noyau de l'agent selon l'invention et le traitement appliqué à chacune d'entre elles :

| Origine de la requête | Nature de la requête | Sauvegarde sur disque |
|---|---|---|
| Manager | GET indépendant de la méthode | NON |
| Manager | GET soumis à la méthode | NON |
| Manager | SET | OUI |
| Manager | CREATE | OUI |
| Manager | DELETE | OUI |
| Méthode | readlnstDirect | NON |
| Méthode | readNextDirect | NON |
| Méthode | writelnstDirect | OUI |

Les requêtes sont sauvegardées dès que la méthode donne son acceptation de la modification et avant même la prise en compte effective de cette modification dans les bases de données triées du noyau de l'agent. Ainsi, l'agent garantit la conservation de l'information en cas de reprise après incident. Le fichier incrémental constitue ainsi une mémoire des différentes modifications des données gérées par l'agent SNMP selon l'invention. Sa structure permet de conserver l'intégralité des informations contenues dans une requête de modification. Ce fichier incrémental est stocké sur disque, par exemple sous le nom « <agent>.incr » dans le même répertoire que le fichier d'instances <DIR>/agts/inst. De plus, le fichier incrémental est structuré de manière à optimiser la vitesse de traitement liée au mécanisme de sauvegarde incrémentale. Ainsi, chaque ligne du fichier incrémental représente une requête de modification dont les différents champs sont séparés par des blancs. Chaque ligne et donc chaque requête est enregistrée séquentiellement dans le fichier incrémental. Ces champs sont le nom de l'instance modifiée (avec son suffixe), la valeur de cette instance, le type de l'opération. Ces différents champs sont, bien entendu, construits automatiquement par le noyau (111) de l'agent SNMP selon l'invention. Le tableau suivant donne la structure d'un fichier incrémental ainsi qu'un exemple :

| **Requête** | **Instance** | **Valeur** |
|---|---|---|
| CREATE | attribute. 1 | 1 |
| SET | attribute.1 | 2 |
| DELETE | attribute. 1 | Deleted 21/06/1998 at 18:12 |
| WRITEINST | attribute.1 | 6 |

Cet exemple illustre toutes les opérations qu'il est possible de consigner dans un fichier incrémental. Dans l'exemple, toutes les requêtes portent sur la même instance. L'ordre des requêtes est chronologique. On peut ainsi voir que l'instance a été détruite après avoir été créée, modifiée par le manager, puis revalorisée lors d'un WRITEINST par la méthode. La séquentialité du fichier incrémental garantit que l'ordre chronologique des requêtes y est conservé.

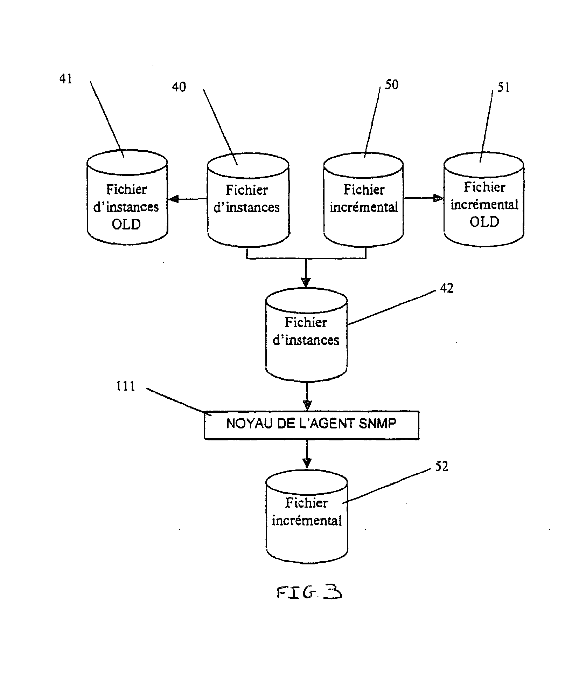

La figure 3 représente le mécanisme de fusion du fichier incrémental et du fichier d'instances. Le fichier de sauvegarde incrémentale peut être utilisé durant l'initialisation de l'agent selon l'invention. Le noyau (111) de l'agent, lorsqu'il s'initialise par rapport au fichier d'instances (40) tient compte bien entendu des modifications intervenues grâce au fichier incrémental (50). Il y a donc une fusion du fichier d'instances (40) avec le fichier incrémental (50), lors d'une initialisation du noyau (111) de l'agent SNMP. Après cette fusion, le noyau (111) disposera d'un nouveau fichier d'instances (42) à jour. Préalablement à cette fusion, une copie (41) du fichier d'instances (40) est faite vers un fichier OLD (41). Une copie (51) du fichier incrémental (50) est faite vers un fichier OLD (51). Les deux fichiers d'instance (40) et incrémental (50) sont fusionnés vers un nouveau fichier d'instances (42) en sortie. Dès lors, le noyau de l'agent SNMP pourra s'initialiser et puiser éventuellement ses données dans le nouveau fichier d'instances (42) issu de la fusion. Enfin, dès que le noyau (111) de l'agent SNMP est initialisé, il dispose d'un fichier incrémental (52) vide dans lequel il pourra conserver les modifications de ses bases de données.

En cas d'absence de l'un ou l'autre des fichiers au début de la phase d'initialisation du noyau de l'agent SNMP, le comportement de ce dernier correspond à celui précisé dans le tableau ci-dessous :

| **Fichier d'instances** | **Fichier incrémental** | **Comportement** | **Situation** |
|---|---|---|---|
| Présent | Présent | Fusion des 2 fichiers | Situation normale |
| Présent | Absent ou vide | Le fichier d'instances est conservé | Pas de modifications depuis la dernière fusion |
| Absent Fichier OLD présent | Présent | Fusion du fichier incrémental avec le fichier d'instances OLD | Un incident s'est produit durant la dernière fusion |
| Absent Fichier OLD absent | Présent | Le fichier incrémental devient le fichier d'instances | Un incident grave s'est produit durant la dernière fusion |
| Absent Fichier OLD présent | Absent | Le fichier d'instances OLD devient le fichier d'instances | Un incident s'est produit durant la dernière fusion, il n'y a pas eu de modifications depuis, situation très improbable |
| Absent Fichier OLD absent | Absent | Un fichier d'instances minimal est généré | Première initialisation ou incident très grave |

Ces comportements du noyau (111) de l'agent SNMP, lorsque les fichiers de sauvegarde se trouvent dans une configuration qui n'est pas standard (i.e. : les fichiers ne sont pas tous les deux présents), permettent de traiter facilement les phases de reprises après incident. Lors de son initialisation, la méthode peut décider de charger les informations de management dont elle a besoin à partir du fichier d'instances, si le noyau de l'agent SNMP n'est pas en mesure de lui fournir (un tel cas se produit généralement si le noyau est absent). Elle déclenchera alors le même mécanisme de fusion par un appel à une fonction initFusion de la librairie d'outil OAT de l'agent. La méthode pourra ainsi disposer d'un fichier d'instances à jour. L'accès concurrentiel à cette fusion est complètement géré par le noyau (111) et la librairie d'outils « OAT ».

Avec le mécanisme de sauvegarde incrémentale, l'archivage périodique n'est absolument plus nécessaire. Par contre, une réintégration des modifications survenues depuis le lancement de l'agent reste indispensable. Comme il a été vu, ces modifications sont intégralement consignées dans le fichier incrémental (50). Ainsi, il y a, en cours de fonctionnement normal de l'agent, une prise en compte des informations contenues dans le fichier incrémental (50), pour les intégrer dans les bases de données triées (11) du noyau (111) de l'agent SNMP. Cette intégration en cours de fonctionnement ne se déclenche pas après l'écoulement d'une période donnée, mais lorsque le fichier incrémental (50) a atteint une taille limite. Cette taille limite peut être précisée dans les paramètres de lancement de l'agent SNMP. De plus, la méthode pourra décider de déclencher elle-même cette intégration du fichier incrémental, alors que le noyau de l'agent est en cours de fonctionnement, en lui soumettant une requête d'écriture (writelnstSock ou writelnstDirect) sur une instance particulière de la base de données triées, propre à l'agent (gamInit-<nom_agent>.0) valorisée par la constante FUSION. Un appel à une primitive de lancement de la fusion (runFusion) réalise la même opération. Lors d'une telle intégration, le même processus que dans la phase d'initialisation est mis en oeuvre. Il y a une copie des fichiers d'instances (40) et incrémental (50), puis fusion dans le nouveau fichier d'instances (42). Dès le début de cette intégration, un nouveau fichier incrémental (52) vide est donc mis à disposition du noyau de l'agent. Ainsi, le processus d'intégration de la sauvegarde incrémentale, n'est absolument pas bloquant pour le noyau de l'agent SNMP, qui peut donc, durant ce processus, poursuivre ses tâches habituelles.

Il est impératif, lorsqu'un incident se produit et qu'un agent doit être arrêté, de pouvoir relancer l'agent en perdant le moins possible, sinon aucune, des informations gérées par l'agent depuis son dernier lancement. L'objectif principal du mécanisme de sauvegarde incrémentale de l'agent selon l'invention, ainsi que la mise en place, impliquée par ce mécanisme, d'une mémoire interne à l'agent SNMP, est tout à fait conforme à cet impératif. Grâce à l'existence même du fichier incrémental, l'agent selon l'invention garantit une perte minimale, sinon nulle, des modifications intervenues dans les bases de données triées (11) au noyau (111) depuis la précédente initialisation de ce dernier. La prise en compte de la sauvegarde incrémentale durant le fonctionnement et l'initialisation de l'agent SNMP garantit également une meilleure conservation des informations de management lors d'une reprise après incident. Les phases de reprises après incident sont facilitées et optimisées par le comportement adopté par le noyau de l'agent SNMP lors de l'initialisation ou de l'intégration de la sauvegarde incrémentale récapitulé dans le tableau du comportement du noyau décrit précédemment. En effet, quelle que soit la configuration des fichiers d'instances (40) et incrémental (50), l'agent SNMP selon l'invention est capable de reprendre dans les meilleures conditions possibles, les informations de management gérées par l'agent dans l'état où était celui-ci avant que l'incident ne se produise.

La présente invention concerne également un outil de création de l'agent qui vient d'être décrit. Précédemment, dans la description, il a été fait mention du processus de création du noyau de l'agent, ce processus est mis en oeuvre par un outil dont la description va suivre. L'outil OAT de création de l'agent selon l'invention, comprend une commande (builbagt) spécifique qui, à partir d'une description formalisée d'une ressource, va créer automatiquement le noyau protocolaire de l'agent SNMP spécifique à la ressource objet de la description formalisée. Comme il a été expliqué plus haut, la description formalisée est une base d'information de management (MIB: Management Information Base) écrite avantageusement suivant le format ASN.1 MIB SNMP V1. A partir de cette MIB, la commande (buildagt) fabrique automatiquent le programme exécutable correspondant au noyau protocolaire de l'agent selon l'invention en compilant avec ce dernier le modèle de la ressource gérée par le noyau. Le résultat de la commande (buildagt) est donc un programme compilé capable, d'une part de dialoguer avec l'administrateur de la ressource par l'intermédiaire d'un protocole de communication SNMP, et d'autre part de construire des messages sollicitant au moins une méthode pour répondre aux requêtes de l'administrateur et mettre à jour un modèle de la ressource également construit par la commande de création de l'agent (buildagt). Le modèle de la ressource est avantageusement sous la forme d'une base de données triées, comme décrite précédemment. Ainsi de façon avantageuse, la commande de création de l'agent selon l'invention permet de fabriquer automatiquement, selon un processus générique, un noyau d'agent spécifique à une ressource déchargeant alors le développeur de l'agent de la conception du noyau protocolaire dudit agent.

Afin de valoriser la base de données triées (11) du noyau (111), la commande de création de l'agent (buildagt) a besoin d'un fichier d'instance et d'un fichier de configuration (agt.confget) déterminant pour chaque instance du modèle, d'une part le mode d'obtention des valeurs d'instance (« direct » ou « signal »), et d'autre part, dans le cas de l'utilisation de mode interface sockets, l'identifiant de la méthode qui lui est associée. En sortie, la commande de création de l'agent produit également des fichiers pour le fonctionnement du noyau de l'agent selon l'invention, notamment un fichier de configuration des communautés de l'agent et de leurs droits, un fichier permettant la correspondance entre l'identifiant d'un objet (OID : Object IDentifier) selon le protocole SNMP et son nom en toutes lettres. Ce dernier fichier permet par la suite d'utiliser, par exemple, dans le fichier d'instances, le nom en toutes lettres de l'instance et non plus son OID, ce qui simplifie considérablement l'écriture du fichier d'instance. De façon avantageuse, le langage selon lequel le programme correspondant au noyau est écrit, est un langage compilé, afin de ne pas perturber la ressource sur laquelle l'agent est implanté.

Nous venons de voir que le noyau protocolaire gère les instances de la ressource par l'intermédiaire d'une base de données triées selon l'ordre lexicographie. Cet ordre lexicographique est lié à la manière d'identifier les instances gérées par l'agent. Ces instances sont identifiées par le modèle représenté par la MIB et est décrit sous forme d'arbre, une feuille de l'arbre correspondant à une instance. Ces arbres sont modélisés dans la MIB sous la forme d'une table où chaque colonne correspond aux indicateurs et où chaque ligne correspond aux instances particulières. Pour repérer de manière unique chaque ligne de la table, on utilise un index de la norme du protocole SNMP V1. Un index est un indicateur de la base correspondant à un attribut. Lorsque l'administrateur envoie une requête de lecture ou modification d'une instance particulière, celle-ci est retrouvée grâce à l'index. La requête de l'utilisateur est saisie en « français », puis retranscrite en utilisant l'OID (Objet IDentifier) du protocole SNMP de l'administrateur. Cet OID est une suite d'entiers positifs selon la norme SNMP. La valeur de l'instance est repérée par le nom d'une colonne (indicateur) munie de l'index (instance) correspondant à la ligne de l'instance. L'indexation des instances permet leur rangement dans un ordre lexicographique. Cet ordre est déterminé par le parcours des arbres du modèle dans l'ordre croissant des différents noeuds. Le nom d'une instance correspond au chemin qu'il est nécessaire de parcourir depuis le sommet de l'arbre pour arriver jusqu'à l'instance.

Comme décrit précédemment, le développeur de l'agent selon l'invention dispose d'une librairie d'outils OAT qui comprend diverses fonctions, de façon à concevoir les différentes méthodes spécifiques à la ressource à administrer. Lorsque les méthodes et le noyau sont construits, l'agent ainsi fabriqué doit être initialisé pour s'intégrer à la ressource. Du fait des différents modes de communication entre le noyau et la ou les méthodes (mode d'interface sockets ou mode d'interface directe), l'initialisation est donc différente selon chacun des modes choisis. En mode d'interface sockets, l'initialisation de l'agent est beaucoup plus simple qu'en mode interface directe. En effet, il suffit pour chaque méthode d'appeler la fonction d'initialisation de la méthode (connectSock) en indiquant son identifiant. Par contre, dans ce mode, il faut veiller à ce que le noyau de l'agent démarre le premier, avant chaque méthode. De plus, comme nous l'avons vu, l'architecture d'un agent en interface sockets utilise deux ports TCP sur lesquels le noyau crée deux sockets d'écoute. Ces ports TCP doivent être déclarés dans un fichier en indiquant le nom de services. En mode d'interface directe, la communication par le biais de tubes nommés et de signaux entre noyau et méthode d'un agent, engendre un partage de ressources système entre ces composants. Chaque entité, noyau et méthode, devra, lors de son initialisation, créer et ouvrir les différents tubes nommés qu'ils utilisent en lecture, ouvrir ceux où ils réalisent des écritures, et faire connaître l'identifiant de son processus afin que l'autre entité puisse lui envoyer des signaux. Ainsi, la méthode devra dès son initialisation faire un appel à la fonction d'initialisation de la méthode (methInit) mise à la disposition du développeur de l'agent. Cette fonction communique l'identifiant du processus de la méthode au noyau, en l'écrivant dans un fichier. La fonction d'initialisation « methInit » se charge de créer et ouvrir le tube nommé, dans lequel la méthode pourra lire les requêtes SNMP (pipeReqSnmp). Si le noyau est d'ores et déjà initialisé, une ouverture du tube nommé dans lequel la méthode écrira les réponses aux requêtes SNMP (pipeRespSnmp) est également réalisée. D'autre part, la fonction methInit, réalise la création et l'ouverture du tube où la méthode lira les réponses aux requêtes méthodes transmises par le noyau (pipeRespMeth). De même, si le noyau est initialisé, la fonction ouvre le tube dans lequel la méthode écrira les requêtes méthode (pipeReqMeth) et enfin, envoie une requête de type écriture d'une instance (WRITEINST) au noyau. Lorsque la méthode s'initialise, le noyau de l'agent ne perturbe pas cette initialisation en transmettant à la méthode des requêtes protocolaires SNMP. Le noyau se trouve alors dans un mode appelé MUTE. Ce mode est enclenché lorsque l'instance gamInit-<nomAgent>.0 est valorisée par une valeur particulière (METHBEGIN). Ceci est provoqué par la méthode grâce à un appel à la fonction methInit. Lorsque le noyau de l'agent selon l'invention se trouve dans le mode MUTE, il ne transmet plus de messages à la méthode, mises à part bien entendu les réponses aux requêtes de lecture directe readlnstDirect et readNextDirect que la méthode est susceptible de lui envoyer lors de l'initialisation de cette dernière. La méthode, si elle est initialisée la première, n'aura pas pu ouvrir le ou les tubes qu'elle utilise en écriture à l'appel de la fonction methInit. Elle devra le faire lorsque le noyau sera initialisé. Aussi, le noyau, s'il est initialisé après la méthode, prévient cette dernière qu'il démarre, par l'envoi d'une requête de type modification d'instance (SET) sur une instance d'attribut qui lui est propre (gamInit-<agentName>.0) valorisée par une valeur particulière (COREBEGIN).

Comme décrit précédemment, le développeur de l'agent selon l'invention a à sa disposition une librairie d'outils OAT pour construire la ou les méthodes spécifiques d'accès à la ressource qui vont, d'une part aller chercher dans la ressource les valeurs des différentes instances et mettre à jour le modèle géré par le noyau, et d'autre part répondre aux sollicitations du noyau. La librairie d'outils comprend essentiellement des primitives et des fonctions différentes en fonction du mode de communication (mode d'interface sockets ou mode d'interface directe) entre le noyau et la ou les méthodes qui vont permettre de définir une A.P.I (interface programmatique applicative) de communication. En mode d'interface sockets, les primitives suivantes sont accessibles au développeur : readInstSock, writelnstSock, readNextSock.
readInstSock
Syntaxe
readInstSock <serverName> <agtName> <timeOut> <inst>
Fonction

La primitive « readInstSock » lit la valeur de l'instance <inst> dans les bases de données triées du noyau de l'agent. L'agent est identifié par le paramètre <agtName>. L'utilisateur doit donner le nom complet de l'instance avec son suffixe. La primitive affiche la valeur de l'instance sur la sortie standard. L'utilisateur doit également préciser dans le paramètre <serverName> la machine sur laquelle se trouve le noyau de l'agent. S'il n'y a pas de réponse après une durée déterminée, <timeOut>, la fonction renvoie une erreur.
writelnstSock
Syntaxe
writelnstSock <serverName <agtName> <inst> <val>
Fonction

La primitive « writelnstSock » écrit une instance <inst> et sa valeur <val> dans les bases de données triées du noyau de l'agent. L'agent est identifié par le paramètre <agtName>. L'utilisateur doit donner le nom complet de l'instance avec son suffixe. Si l'instance existe, sa valeur est modifiée sinon elle est crée. L'utilisateur doit également préciser dans le paramètre <serverName> la machine sur laquelle se trouve le noyau de l'agent. On ne peut créer que des nouvelles instances tabulaires (dont le suffixe n'est pas ".0 ").
readNextSock
Syntaxe
readNextSock <serverName> <agtName> <timeOut> <inst>
Fonction

La primitive « readNextSock » lit la valeur de l'instance suivante dans l'ordre lexicographique de <inst> dans les bases de données triées du noyau de l'agent. L'agent est identifié par le paramètre <agtName>. L'utilisateur doit donner le nom complet de l'instance avec son suffixe. La primitive affiche la valeur de l'instance sur la sortie standard. L'utilisateur doit également préciser dans le paramètre <serverName> la machine sur laquelle se trouve le noyau de l'agent. S'il n'y a pas de réponse après une durée déterminée, <timeOut>, la fonction renvoie une erreur. L'utilisateur peut rechercher la première instance gérée par le noyau de l'agent en indiquant root.0 dans le paramètre <inst>.

En mode d'interface sockets, les fonctions suivantes sont accessibles au développeur: readInstSock, writelnstSock, readNextSock, receiveSock, writeRespSock :
readInstSock
Type retourné
GAMResultType
Paramètres
GAMMessType *messSock
const int sock_meth
const long timeOut
Description

La fonction « readInstSock » qui lit la valeur d'une instance en mode « sockets » comporte les paramètres ci-dessus. Le nom de l'instance avec son suffixe doit être placé dans « messSock.inst ». L'opération « messSock.operation » est positionnée automatiquement à READINST par la fonction. La valeur de l'instance est retournée dans « messSock.val ». On doit préciser le descripteur « sock_meth » de la socket.

S'il n'y a pas de réponse après une durée « timeOut », secondes, la fonction renvoie une erreur. Le code d'erreur renvoyé est également reporté dans « messSock.result ». Le premier paramètre de la fonction « readInstSock » est un pointeur sur une structure de type « GAMMessType », car différents champs de cette structure (operation, inst, val et result) sont positionnés durant l'exécution de la fonction.
readNextSock
Type retourné
GAMResultType
Paramètres
GAMMessType *messSock
const int sock_meth
const long timeOut
Description

La fonction « readNextSock » qui lit la valeur de l'instance suivante dans l'ordre lexicographique en mode sockets comporte les paramètres ci-dessus. Le nom de l'instance précédente avec son suffixe doit être placé dans « messSock.inst ». On peut rechercher la première instance gérée par le noyau de l'agent en indiquant « root.0 » dans le paramètre « messSock.inst ». L'opération « messSock.operation » est positionnée à READNEXT par la fonction. Le nom de l'instance suivante est retourné dans « messSock.inst ». La valeur de l'instance suivante est retournée dans « messSock.val ». On doit préciser le descripteur « sock_meth » de la socket.

S'il n'y a pas de réponse après une durée « timeOut » seconde, la fonction renvoie une erreur. Le code d'erreur renvoyé est également reporté dans « messSock.result ». Le premier paramètre de la fonction « readNextSock » est un pointeur sur une structure de type « GAMMessType », car différents champs de cette structure (operation, inst, val et result) sont positionnés durant l'exécution de la fonction.
writelnstSock
Type retourné
GAMResultType
Paramètres
GAMMessType messSock
const int sock_meth
Description

La fonction « writelnstSock » qui écrit une instance dans les bases de données triées du noyau de l'agent en mode socket comporte les paramètres ci-dessus. Le nom de l'instance avec son suffixe doit être placé dans « messSock.inst » et sa valeur dans « messSock.val ». L'opération « messSock.operation » est positionnée à WRITEINST par la fonction. On doit préciser le descripteur sock_meth de la socket. Aucun message d'acquittement de la part du noyau n'est attendu. Ainsi le code retour de la fonction rend uniquement compte de l'envoi du message au noyau de l'agent. En particulier, si l'on tente de créer une instance non tabulaire, le noyau de l'agent empêchera bien cette création illicite, mais la fonction « writelnstSock » n'aura pas renvoyé d'erreur.
receiveSock
Type retourné
GAMResultType
Paramètres
GAMMessType *messSock
const int sock_snmp
Fonction

La fonction « receiveSock » qui lit un message « *messSock » dans le socket TCP « sock_snmp » comporte les paramètres ci-dessus. Cette fonction peut être utilisée par la méthode pour lire les requêtes SNMP que lui transmet le noyau de l'agent en mode sockets. Elle assure un contrôle d'intégrité du message reçu. En d'autres termes, au retour de cette fonction, la structure messSock est convenablement renseignée.
writeRespSock
Type retourné
GAMResultType
Paramètres
GAMMessType *messSock
const int sock_snmp
Fonction

La fonction «writeRespSock » qui répond à une requête SNMP provenant du noyau de l'agent en mode socket comporte les paramètres ci-dessus. Les champs opération et inst doivent être identiques à ceux transmis par le noyau dans la requête SNMP. Ce message de requête SNMP aura pu être lu par la méthode grâce à la fonction « receiveSock ». La valeur de l'instance doit être placée dans « messSock.va »I. On doit indiquer le descripteur « sock_snmp » du socket TCP. Ce socket aura pu être ouvert dans la méthode grâce à la fonction « connectSock ».

En mode d'interface direct les primitives suivantes sont accessibles au développeur : readlnstDirect, WritelnstDirect, readNextDirect.
readInstDirect
Syntaxe
readlnstDirect <serverName> <agtName> <timeOut> <inst>
Fonction

La primitive « readlnstDirect » lit la valeur de l'instance <inst> dans les bases de données triées du noyau de l'agent. L'agent est identifié par le paramètre <agtName>. L'utilisateur doit donner le nom complet de l'instance avec son suffixe. La primitive affiche la valeur de l'instance sur la sortie standard. L'utilisateur doit également préciser dans le paramètre <serverName> la machine sur laquelle se trouve le noyau de l'agent. S'il n'y a pas de réponse après une durée déterminée, <timeOut>, la fonction renvoie une erreur.
writeDirectSock
Syntaxe
writelnstDirect <serverName <agtName> <inst> <val>
Fonction

La primitive « writelnstDirect » écrit une instance <inst> et sa valeur <val> dans les bases de données triées du noyau de l'agent. L'agent est identifié par le paramètre <agtName>. L'utilisateur doit donner le nom complet de l'instance avec son suffixe. Si l'instance existe, sa valeur est modifiée sinon elle est crée. L'utilisateur doit également préciser dans le paramètre <serverName> la machine sur laquelle se trouve le noyau de l'agent. On ne peut créer que des nouvelles instances tabulaires (dont le suffixe n'est pas ".0 ").
readNextDirect
Syntaxe
readNextDirect <serverName> <agtName> <timeOut> <inst>
Fonction

La primitive « readNextDirect » lit la valeur de l'instance suivante dans l'ordre lexicographique de <inst> dans les bases de données triées du noyau de l'agent. L'agent est identifié par le paramètre <agtName>. L'utilisateur doit donner le nom complet de l'instance avec son suffixe. La primitive affiche la valeur de l'instance sur la sortie standard. L'utilisateur doit également préciser dans le paramètre <serverName> la machine sur laquelle se trouve le noyau de l'agent. S'il n'y a pas de réponse après une durée déterminée, <timeOut>, la fonction renvoie une erreur. L'utilisateur peut rechercher la première instance gérée par le noyau de l'agent en indiquant root.0 dans le paramètre <inst>.

En mode d'interface direct les fonctions suivantes sont accessibles au développeur : readlnstDirect, WritelnstDirect, readNextDirect, readPipe, writeResp.
readlnstDirect
Type retourné
GAMResultType
Paramètres
GAMMessType *messPipe
const char *gamAgtDir
const char *agtName
const long pipeReqMeth
const long pipeRespMeth
const long timeOut
Fonction

La fonction « readInstDirect » qui lit la valeur d'une instance en mode direct comporte les paramètres ci-dessus. Le nom de l'instance avec son suffixe doit être placé dans « messPipe.inst ». L'opération « messPipe.operation » est positionnée automatiquement à READINST par la fonction. La valeur de l'instance est retournée dans « messPipe.val ». On doit préciser le répertoire « gamAgtDir » du noyau de l'agent et le nom « agtName » de l'agent. Il faut également indiquer les descripteurs « pipeReqMeth » et « pipeRespMeth » des tubes nommés. Ces tubes auront pu être ouverts dans la méthode grâce à la fonction « methInit » décrite ultérieurement. Le message de la requête est écrit par la fonction dans le tube nommé « pipeReqMeth ». Le message de réponse est lu par la fonction dans le tube nommé. Les échanges entre la méthode et le noyau de l'agent sont synchronisés par la fonction, grâce au signal réservé SIGUSR1. S'il n'y a pas de réponse après une durée de limite « timeOut » en secondes, la fonction renvoie une erreur. Le code d'erreur renvoyé est également reporté dans « messPipe.result ». Le premier paramètre de la fonction « readlnstDirect » est un pointeur sur une structure de type « GAMMessType », car différents champs de cette structure (operation, inst, val et result) sont positionnés durant l'exécution de la fonction.
readNextDirect
Type retourné
GAMResultType
Paramètres
GAMMessType *messPipe
const char *gamAgtDir
const char *agtName
const long pipeReqMeth
const long pipeRespMeth
const long timeOut
Description

La fonction « readNextDirect » qui lit la valeur de l'instance suivante dans l'ordre lexicographique en mode direct comporte les paramètres ci-dessus. Le nom de l'instance précédente avec son suffixe doit être placé dans « messPipe.inst ». On peut rechercher la première instance gérée par le noyau de l'agent en indiquant « root.0 » dans le paramètre « messPipe.inst ». L'opération « messPipe.operation » est positionnée à READNEXT par la fonction. Le nom de l'instance suivante est retourné dans « messPipe.inst ». La valeur de l'instance suivante est retournée dans messPipe.val. On doit préciser le répertoire « gamAgtDir » du noyau de l'agent et le nom « agtName » de l'agent. Il faut également indiquer les descripteurs « pipeReqMeth » et « pipeRespMeth » des tubes nommés. Ces tubes auront pu être ouverts dans la méthode grâce à la fonction « methInit » décrite ultérieurement. Le message de la requête est écrit par la fonction dans le tube nommé « pipeReqMeth ». Le message de réponse est lu par la fonction dans le tube nommé « pipeRespMeth ». Les échanges entre la méthode et le noyau de l'agent sont synchronisés par la fonction, grâce au signal réservé SIGUSR1. S'il n'y a pas de réponse après une durée limitée « timeOut » en secondes, la fonction renvoie une erreur. Le code d'erreur renvoyé est également reporté dans « messPipe.result ». Le premier paramètre de la fonction « readNextDirect » est un pointeur sur une structure de type « GAMMessType », car différents champs de cette structure (operation, inst, val et result) sont positionnés durant l'exécution de la fonction.
writelnstDirect
Type retourné
GAMResultType
Paramètres
GAMMessType messPipe
const char *gamAgtDir
const char *agtName
const long pipeReqMeth
Fonction

La fonction « writelnstDirect » qui écrit une instance dans les bases de données triées du noyau de l'agent en mode direct comporte les paramètres ci-dessus. Le nom de l'instance avec son suffixe doit être placé dans « messPipe.inst » et sa valeur dans « messPipe.val ». L'opération « messPipe.operation » est positionnée à WRITEINST par la fonction. On doit préciser le répertoire « gamAgtDir » du noyau de l'agent et le nom « agtName » de l'agent. Il faut également indiquer le descripteur du tube nommé « pipeReqMeth ». Ce tube aura pu être ouvert dans la méthode, grâce à la fonction « methInit » décrite ultérieurement. Le message de requête est écrit par la fonction dans le tube nommé pipeReqMeth. L'envoi du message de la méthode vers le noyau de l'agent est synchronisé par la fonction, grâce au signal réservé SIGUSR1. Aucun message d'acquittement de la part du noyau n'est attendu. Ainsi le code retour de la fonction rend uniquement compte de l'envoi du message au noyau de l'agent. En particulier, si l'on tente de créer une instance non tabulaire, le noyau de l'agent empêchera bien cette création illicite, mais la fonction writelnstDirect n'aura pas renvoyé d'erreur.
readPipe
Type retourné
GAMResultType
Paramètres
const long dpipe
GAMMessType *messPipe
Fonction

La fonction « readPipe » qui lit un message « *messPipe » dans le tube nommé « dpipe » comporte les paramètres ci-dessus. Cette fonction peut être utilisée par la méthode pour lire les requêtes SNMP que lui transmet le noyau de l'agent en mode direct.
writeResp
Type retourné
GAMResultType
Paramètres
GAMMessType messPipe
const char *gamAgtDir
const char *agtName
const long pipeRespSnmp
Fonction

La fonction « writeResp » qui répond à une requête SNMP provenant du noyau de l'agent en mode direct comporte les paramètres ci-dessus. Les champs operation et inst doivent être identiques à ceux transmis par le noyau dans la requête SNMP. Ce message de requête SNMP aura pu être lu par la méthode grâce à la fonction « readPipe ». La valeur de l'instance doit être placée dans « messPipe.val ». On doit préciser le répertoire « gamAgtDir » du noyau de l'agent et le nom « agtName » de l'agent. Il faut également indiquer le descripteur du tube nommé « pipeRespSnmp ». Ce tube aura pu être ouvert dans la méthode grâce à la fonction methInit décrite ultérieurement. Le message de réponse est écrit par la fonction dans le tube nommé « pipeRespSnmp ». L'envoi du message de la méthode vers le noyau de l'agent est synchronisé par la fonction grâce au signal réservé SIGUSR2.

Le développeur a également accès à des fonctions d'initialisation selon chaque mode :
ConnectSock (mode interface sockets)
Nom
connectSock
Paramètres
const char *agtName
const char *serverName
const int methld
int *sock_meth
int *sock_snmp
Description

La fonction « connectSock » qui réalise la connexion d'une méthode au noyau comporte les paramètres ci-dessus. Le nom de l'agent est passé dans « agtName », le nom de la machine sur laquelle tourne le noyau dans « serverName » et l'identifiant de la méthode choisi arbitrairement par le développeur de manière à ce qu'il soit unique pour le même noyau dans « methld ». Le descripteur du socket sur lequel la méthode transmettra ses requêtes (writelnst, readInst...) au noyau est retourné dans « sock_meth ». Le descripteur de le socket sur lequel le noyau soumettra à la méthode les requêtes provenant du manager est retourné dans « sock_snmp ». La fonction « connectSock » réalise les connexions des deux sockets TCP et envoie au noyau un message lui faisant prendre connaissance de l'identifiant de la méthode.
MethInit (mode interface directe)
Nom
methInit
Paramètres
const char *gamAgtDir
const char *pipesDir
const char *agtName
long *pipeRespSnmp
long *pipeReqSnmp
long *pipeReqMeth
long *pipeRespMeth
Description

La fonction « methInit » qui initialise la méthode comporte les paramètres ci-dessus. Le développeur doit préciser le répertoire « gamAgtDir » du noyau de l'agent, le répertoire « pipesDir »des tubes utilisés par l'agent, et le nom « agtName » de l'agent. La fonction « methInit » ouvre les tubes nommés utilisés pour communiquer avec le noyau de l'agent et renvoie des pointeurs sur les descripteurs de ces tubes. Les paramètres de la fonction « methInit » correspondant aux descripteurs de ces tubes sont des pointeurs, car ils sont valorisés durant l'exécution de la fonction. La fonction « methInit » envoie au noyau de l'agent un message de type écriture d'instance (WRITEINST) valorisant une instance particulière de la base de données triées (11) du noyau (111) (gamInit-<agtName>) par une valeur déterminée (METHBEGIN). Si le noyau n'est pas encore initialisé, seules la création et l'ouverture des tubes en lecture (pipeReqSnmp et pipeRespMeth) sont réalisées dans la fonction « methInit ». Dans ce cas, une erreur est renvoyée et les descripteurs des tubes en écriture (pipeRespSnmp and pipeReqMeth) sont valorisés à 0 (zéro). Lorsque le noyau s'initialise, la méthode en est prévenue par la réception d'une requête de modification d'instance (SET) valorisant l'instance particulière (gamInit-<agtName>.0) par une valeur déterminée (COREBEGIN). . La méthode devra alors ouvrir en écriture non bloquante les tubes « pipeRespSnmp ». Si le noyau est déjà initialisé, l'envoi du message WRITEINST valorisant l'instance « gamInit-<agtName>.0 » à METHBEGIN déclenchera le mode MUTE. Il est impératif que la fonction « methInit » soit appelée par la méthode dès son lancement.
MethEndInit (mode interface directe)
Nom
methEndInit
Paramètres
const char *gamAgtDir
const char *pipesDir
const char *agtName
const long pipeReqMeth
Description

La fonction « methEndInit » qui détermine la fin de l'initialisation de la méthode ainsi que la fin de l'initialisation du noyau de l'agent dans le cas où ce dernier est initialisé par la méthode comporte les paramètres ci-dessus. Le développeur doit préciser le répertoire « gamAgtDir » du noyau de l'agent, le répertoire « pipesDir » des tubes utilisés par l'agent, et le nom de l'agent « agtName ». Si le noyau (111) n'est pas encore initialisé, une erreur GAM est renvoyée à l'administrateur. Si le noyau est déjà initialisé, la fonction d'initialisation « methEndInit » envoie au noyau de l'agent un message de type écriture d'instance (WRITEINST) valorisant l'instance particulière de la base de données triées (gamlnit-<agtName>.0) par une valeur déterminée (METHEND), ce qui déclenchera le mode MUTE.: La fonction d'initialisation « methEndInit » doit être appelée par la méthode à la fin de son lancement et, dans le cas où le noyau de l'agent est initialisé par la méthode, à la fin de la succession de « writelnstDirect ».

La fonction « initFusion » réalise une fusion entre fichiers d'instances.
InitFusion (pour les deux modes)
Nom
initFusion
Paramètres
const char *gamAgtDir
const char *instDir
const char *tmpDir
const char *agtName
Description

Le développeur doit préciser le répertoire « gamAgtDir » du noyau de l'agent, le répertoire « instDir » où se trouvent les fichiers d'instances et incrémental, le nom de l'agent « agtName » et un répertoire « tmpDir » de travail temporaire. La fonction « initFusion » est bloquante jusqu'à ce qu'un fichier d'instances fusionné soit disponible. Il est impératif que la fonction « initFusion » soit appelée par la méthode, si celle-ci doit s'initialiser par rapport au fichier d'instances.

Afin d'illustrer les diverses opérations possibles grâce à une méthode, deux exemples de méthode en mode interface socket sont fournis en annexe. Dans le premier exemple en annexe 1, l'utilisateur passe en paramètre de cette première méthode le nom de l'agent auquel elle doit se connecter. Après cette connexion, la méthode attend des messages en provenance du noyau. Puis après vingt secondes, elle modifie et consulte des instances contenues dans les bases de données triées du noyau.

Le deuxième exemple en annexe 2, permet d'illustrer la communication entre deux méthodes. Il met également en évidence l'utilisation du readNext pour balayer une table. On notera ainsi l'avantage du cache mémoire que constituent les bases de données triées du noyau.

Il est clair que d'autres modifications à la portée de l'homme du métier entrent dans le cadre de l'invention.

### ANNEXE 1

```
/*
Nom du produit    :    OAT Agent - Methode
Nom du fichier    :    methode1_sock.c
Type              :    fichier source codé en language C
#includeinclude   <gamApi/GAMAPI.h>
/*----------------------------------------------------*/
/*Section de modification : Modifier ces 2 constantes*/
/*----------------------------------------------------*/
/*Nom du serveur où le noyau de l'agent tourne */
#define SERVERNAME "ange"
/*couches TCP */
int sock_meth, sock_snmp;
/*identifiant de la methode: WARNING ATTENTION le fichier ≪ confget ≫ doit être configuré */
#define METHID 1
/*------------------------------------*/
/* Fin de la section de modification */
/*-----------------------------------*/
/*Nom de l'agent
char agtName[MAXENFILENAME];
/* ≪sockets≫ TCP */
int sock_meth, sock_snmp;
/*Réception de messages de type SNMP provenant du noyau de l'agent */
static CVoidType snmpReceive(CIntfType sock)
{
       GAMMesType mess;
       GAMERROR("Message reçu du noyau de l'agent \n");
       receiveSock(&mess, sock);
       if (mess.result !=GAM_ERR_CORE_NOT_READY){
              switch (mess.operation) {
                     case GET:
                            GAMERROR1("GET on sur %s\n", mess.inst);
                            /*Instance spéciale ⇒ valeuer = <beep/ascii>*/
                            if (!(strcmp(mess.inst, "panelDescription.0"))) {
                                     GAMERROR1("Instance spéciale <%s>\n", mess.inst);
                                     sprintf(mess.val, "caractere7:%c:fin", 0x7);
                                     GAMERROR1("Valeuer = %s\n", mess.val);mess.result=OK;
                            }
                            /* Pour toutes les autres instances ⇒ valeur=1*/
                            else{
                                     strcpy(mess.val, "1");
                                     GAMERROR1("Valeur = %s\n", mess.val); mess.result= OK;
                            }
                            break;
                     case SET:
                            GAMERROR2("SET on sur %s=%s\n", mess.inst,mess.val);
                            mess.result=OK;
                            /* Instance spéciale ⇒ impossible */
                            if (!(strcmp(mess.inst,"pannelVendor.0"))) {
                                     mess.result=NOK;
                                     GAMERROR1("Instance spéciale <%s> NOPAS DE
SET\n",mess.inst);
                            }
                            break;
                     case CREATE:
                            GAMERROR2("CREATE on sur %s=%s
REFUSE\n", mess.inst, mess.val);
                            mess.result=NOK;
                            break;
                     case DELET;
                            GAMERROR1("DELETE on sur %s REFUSE\n", mess.val);
                            mess result=NOK;
                            break;
                     case SETLAST:
                            GAMERROR2("DERNIERE instance d'un SET sur
 %s=%s\n", mess.inst, mess.val);
                            mess.result=OK;
                            /* Instance spéciale ⇒ set impossible*/
                            if (!(strcmp(mess.inst, "panelVendor.0"))) {
                                     mess.result=NOK;
                                     GAMERROR1("Instance spéciale <%s> PAS DE SET\n", mess.inst);
                            }
                            break;
                     case NOTIFY:
                            GAMERROR1("Notification reçue de la méthode
 identifiant = %d...\n", mess.result);
                            GAMERROR1("Message notifié = %s\n", mess.val);
                            /*...Votre agent peut éventuellement
réaliser d'autres traitement sur réception de notification...
                     Wr Ecrire le code ici */
                            break
              }
              if (mess.operation!=NOTIFY){
                     writeRespSock(mess, sock);
                     if (mess.result == OK) {
                            GAMERROR1("Réponse envoyée <%s>\n", mess.val);
                     }
                     else {
                            GAMERROR("Réponse envoyée NOK \n");
                     }
              }
       }
       else
       {
              GAMERROR("Le noyau est tombé, arrêt de la méthode !...\n");
              exit(1);
       }
}
/* Fonction principale : argv[1]=nom de l'agent (exemple : methode1_sock miscagt)*/
void main(int argc,char**argv)
{
       GAMMess Type mess;
       fd_set read_mask;
       struct timeval timeWait;
       GAMResultType result;
       ClntfTyperc;
       /*Lecture des arguments */
       if (argc!=2) {
              printGamError(GAM_ERR_ARG);
              printf("Usage Syntaxe : %s <nom_agent_>>\n");
              printf("...Arrêt de la méthode !\n");
              exit(1);
       }
       strcpy(agtName, argv[1]);
       printf("Méthode démarrée pour l'agent GAM %s\n", agtName);
       /*Initialisation */
       result=connectSock(agtName, SERVERNAME, METHID, &Sock_meth,&sock_snmp);
       if (result) {
              printGamError(result);
              exit(result);
       }
       GAMERROR1("Méthode connectée au noyau de l'agent %s agent\n",agtName);
       /*Boucle infinie : attente pendant 20 secondes d'un message snmp
       provenant du noyau de l'agent puis envoi de sending writeInst, readInst and et readNext*/
       timeWait.tv_sec=20L;
       timeWait.tv_usec=0L;
       for (;;) {
              FD_ZERO(&read_mask);
              FD_SET(sock_snmp, &read_mask);
              rc=select(sock_snmp+1, &read_mask, (fd_set*)NULL,
(fd_set*)NULL,&timeWait);
              if (rc==0) {
                     printf("Timeout de 20 secondes atteint !\n);
strcpy(mess.inst, "pannelVendor.0");
                     sprintf(mess.val, "Vendeur aléatoire no %s", rand());
                     result=writeInstSock(mess, sock_meth);
                     printf("WriteInstSock effectué \n");
                     strcpy(mess.inst, "pannelld.0");
                     result=ReadInstSock(&mess, sock_meth,2);
                     if (result)
                            printGamError(result);
                     else
                            printf("ReadInstSock :
inst=%s\tval=%s\n", mess.inst, mess.val);
                     strcpy(mess.inst, "pannelVendor.-1");
                     result=readNextSock(&mess, sock_meth,2);
                     if (result)
                            printGamError(result);
                     else
                            printf("readNextSock :
inst=%s\tval=%s\n", mess.inst, mess.val);
              }
              if (FD_ISSET(sock_snmp, &read_mask)) {
                     snmpReceive(sock_snmp):
              }
       }
                                     }
```

### ANNEXE 2

```
/*
Nom du produit    :    OAT Agent - Methode
Nom du fichier    :    methode2_sock.c
Type              :    fichier source codé en language C
Copyright         :    BULL 1996
*/
Product Name:     OAT Agent-Methode
File Name   :     methode2_sock.c
Type        :     fichier source codé en C
*/
#include    <gamApi/GAMAPI.h>
/*----------------------------------------------------*/
/*Section de modification : Modifier ces 2 constantes*/
/*-------------------------------- */
/*Nom du serveur où le noyau de l'agent tourne */
#define SERVERNAME "ange"
/* Identifiant de la méthode : WARNING le fichier"confget"doit être configuré */
#define METHID 2
/*------------------------*/
même modification que la méthode 1 de l'annexe 1
/*-----------------------------------------------*/
/*Nom du serveur où le noyau de l'agent tourne */
#define SERVERNAME "ange"
/* Identifiant de la méthode : ATTENTION le fichier "confget" doit être configuré*/
define METHID 2
/*-------------------------------- */
Fin de la section de modification */
/*--------------------------------
*/
/*Nom de l'agent
char agtName[MAXENFILENAME];
/* couches TCP */
int sock_meth, sock_snmp;
/*Variable d'environnement à prendre en compte avec si une modification (SET) intervient */
int modif=0;
/* Quand la commande GET est reçue sur une instance spéciale, la réponse est
calculée et dépend des autres attributs */
static CBoolType verifyGet(GAMMessType*messRequast)
{
        GAMMessType messEvent;
        ClntfType i;
        sprintf(messEvent.inst, "lightld.-1);
        for (i=0;!strncmp(messEvent.inst, "lightld.", 8);i++){
                readNextSock( &messEvent.sock_meth, 10);
                if (messEvent.result != OK)
                        break;
        }
        if (messEvent.result == OK) {
                i--;
                GAMERROR1("Actuellement %des instances dans lightTable\n", i);
                sprint(messRequest⇒val, "%d", i);
                return(TRUE);
        }
        else {
                GAMERROR("Pas de reponse : impossible de lire le nombre d'instances dans
la table lightTable \n");
                return(FALSE);
        }
}
/*Réception de messages SNMP du noyau de l'agent */
static CVoidType snmpReceive(ClntfType sock)
{
        GAMMess Type mess;
        GAMERROR("Message reçu du noyau de l'agent \n");
receiveSock(&mess, sock);
        if (mess.result!=GAM_ERR_CORE_NOT_READY) {
                switch (mess.operation) {
                        case GET:
                                GAMERROR1("GET on sur %s\n", mess.inst);
                                /* Instance spéciale ⇒ la valeur doit être calculéee */
                                if (!strcmp(mess.inst, "lightsNum.0")) {
                                        GAMERROR1("%s est une instance spécialeis, sa
valeur doit être calculée...\n",mess.inst);
                                        if (verifyGet(&mess))
                                                mess.result=OK;
                                        else
                                                mess.result=NOK;
                                }
                                /* Pour toutes les autres instances ⇒ valeur=1 */
                                else {
                                        strcpy(mess.val, "1");
                                        GAMERROR1("Valeuer = %s\n", mess.val);
                                        mess.result=OK;
                                }
                                break;
                        case SET:
                                GAMERROR2("SET on sur %s=%s\n", mess.inst,mess.val);
                                mess.result=OK;
                                /*Instance spéciale ⇒ set impossible */
                                if (!(strcmp(mess.inst, "lightsNum.0"))) {
                                        mess.result=NOK;
                                        GAMERROR1("Instance spéciale <%s> PAS DE
SET\n", mess.inst);
                                }
                                else
                                        modif++;
                                break;
                        case CREATE:
                                GAMERROR2("CREATE on sur %s=%s ACCEPTED\n", mess.inst, mess.val);
                                mess.result=OK;
                                modif++;
                                break;
                        case DELET:
                                GAMERROR1("DELETE on %s ACCEPTED\n", mess.val);
                                mess.result=OK;
                                modif++;
                                break;
                        case SETLAST:
                                GAMERROR2("DERNIERE instance d'un SET sur
%s=%s\n", mess.inst, mess.val);
                                mess.result=OK;
                                /* Instance spéciale ⇒ set impossible */
                                if (!(strcmp(mess.inst,"lightsNum.0"))) {
                                        mess result=NOK;
                                        GAMERROR1("Instance spéciale <%s> PAS SET\N3? MESS;INST°.
                                }
                                else
                                        modif++;
                                break;
                        case NOTIFY:
                                GAMERROR1("Notification reçue de la méthode
identifiant = %d...\n", mess.result);
                                GAMERROR1("Message notifié = %s\n", mess.val);
                                /* Votre agent peut éventuellement réaliser d'autres
traitement sur réception de notification...Ecrire le code ici */
break;
                }
                if (mess.operation!=NOTIFY) {
                        writeRespSock(mess, sock);
                        if (mess.result == OK) {
                                GAMERROR1("réponse envoyée <%s>\n", mess.val);
                        }
                        else {
                                GAMERROR("Réponse envoyée NOK\n");
                        }
                }
        }
        else
        {
                GAMERROR("Le noyau est tombé, arrêt de la méthode!...\n");
                exit(1);
        }
}
/* Fonction principale : argv[1]=nom de l'agent (exemple : methode2_sockMain
function : argv[1]=agent name (example : methode1_sock miscagt)*/
void main(int argc.char **argv)
{
        fd_set read_mask;
        struct timeval timeWait;
        GAMResultType result;
        ClntfType rc;
        /* Lecture des arguments */
        if (argcl=2) {
                printGamError(GAM_ERR_ARG);
                printf("Usage Syntaxe : %s <agent_name>\n");
                printf("..Arrêt de la méthode !\n");
                exit(1);
        }
        strcpy(agtName, argv[1]);
        printf("Méthode démarrée pour l'agent OAT %s_n".,agtName);
        /* Initialisation */
        result=connectSock(agtName, SERVERNAME, METHID, &sock_meth,&sock_snmp);
        if (result){ ´
                printGamError(result);
                exit(result);
        }
        GAMERROR1("Méthode connectée au noyau de l'agent \n", agtName);
        /* Boucle infinie : attente pendant 20 secondes d'un message snmp
provenant du noyau de l'agent puis notification à la méthode 1 s'il y a eu des
modifications */
        timeWait.tv_sec=20L;
        timeWait.tv_usec=0L;
        for (;;) {
                FD_ZERO(&reas_mask);
                FD_SET(sock_snmp, &read_mask);
                rc=select(sock_snmp+1, &read_mask, (fd_set *)NULL, (fd_set*)NULL,&timeWait);
                if (rc==0) {
                        printf("Le Timeout de 20 secondes est atteint !8n");
                        if (modif) {
                                result=notifyMeth("Il y a des modifications dans la table
 lightTable",sock_meth,agtName,4,5);
                                GAMERROR1("notification transmise reésultat=%d\n",result);
                                modif=0;
                        }
                }
                if (FD_ISSET(sock_snmp, &read_mask)) {
                        snmpReceive(sock_snmp);
                }
        }
}
}
```

## Revendications

1. Agent de communication entre un administrateur (20) et au moins une ressource (30) d'un système informatique, comprenant un noyau (111) protocolaire créé automatiquement à partir d'une description formalisée de la ressource (30), ce noyau (111) une fois créé comprenant, sous forme compilée, une première interface (14) de communication avec l'administrateur (20) et un modèle (11) de la ressource (30) comprenant au moins une valeur d'au moins une instance de la ressource (30), ladite au moins une valeur étant accessible par l'administrateur (20) par l'intermédiaire de la première interface (14) de communication, **caractérisé en ce que**, lorsque l'administrateur (20) envoie dans une même requête une opération de modification, SET, sur une liste d'instances, le noyau (111) transmet un à un des messages de modification SET, d'instance vers au moins une méthode (12) correspondant à chaque instance ladite méthode étant comprise dans une seconde interface du noyau, un dernier message, SETLAST, de modification de la dernière instance étant transmis en indiquant qu'il s'agit de la dernière instance de la liste ; et **en ce que** tant que ladite au moins une méthode (12) ne reçoit pas le dernier message du noyau (111), les modifications des instances sont mémorisées sans être validées, et dès que le dernier message SETLAST, est reçu par ladite au moins une méthode (12), si toutes les modifications des instances sont possibles, celles-ci sont toutes validées, alors qu'elles sont toutes annulées dans le cas contraire.

2. Agent selon la revendication 1, **caractérisé en ce qu'**il comprend dans une seconde interface (13) au moins une méthode (12) d'accès à la ressource (30) pour communiquer avec le noyau (111) protocolaire et mettre à jour et/ou lire au moins une valeur d'une instance du modèle (11) de la ressource spécifique à la méthode (12), et pour répondre aux requêtes du noyau (111) concernant la mise à jour d'au moins une valeur d'instance du modèle de la ressource.

3. Agent selon la revendication 2, **caractérisé en ce que** la ressource étant modélisée sous forme d'attributs, l'accès de chaque attribut géré par l'agent peut être obtenu en un mode, soit « direct », soit « signal », défini dans un fichier de configuration par example, <agt>.confget.

4. Agent selon la revendication 3, **caractérisé en ce que** le fichier de configuration comporte, lorsque la méthode d'accès utilise des primitives d'interface sockets, un identifiant de la méthode qui est associée à l'instance.

5. Agent selon l'une des revendications 1 à 4, **caractérisé en ce que** la description formalisée de la ressource est sous forme d'une base MIB , management information base, et le modèle (11) de la ressource comprend une base de données triées construite à partir de la description formalisée de la ressource.

6. Agent selon l'une des revendications 1 à 5, **caractérisé en ce que** le noyau (111) protocolaire comprend un fichier compilé contenant des données triées (115) pour l'administration des objets spécifiques à son fonctionnement.

7. Agent selon l'une des revendications 1 à 6, **caractérisé en ce que** la communication entre l'administrateur et le noyau protocolaire s'effectue selon le protocole de gestion de réseau simple SNMP, Simple Network Management Protocol, ASN1, Abstract Syntax Notation One, par l'intermédiaire de verbes permettant les opérations de lecture d'une instance GET, de lecture de l'instance suivante GET-NEXT, et de modification d'une instance, SET.

8. Agent selon l'une des revendications 1 à 7, **caractérisé en ce que** la communication entre la méthode (12) et le noyau (111) s'effectue par l'intermédiaire de logiciels de communication TCP/IP connectés.

9. Agent selon l'une des revendications 1 à 8, **caractérisé en ce que** la communication entre le noyau (111) protocolaire et au moins une méthode (12) d'accès aux ressources (30) en mode « socket» s'effectue par l'intermédiaire de deux processus de connexion TCP/IP qui communiquent par des primitives exécutables sockets permettant de réaliser les opérations de lecture de la valeur d'une instance, "readInstSock" de modification d'une instance par example "writeInstSock" de lecture de l'instance suivante "notifymeth" "readNextSock" d'écriture d'une nouvelle instance, et de suppression d'une instance.

10. Agent selon l'une des revendications 1 à 9, **caractérisé en ce que** la communication entre deux méthodes (12) d'accès aux ressources (30) en mode « sockets » s'effectue par l'appel d'une fonction.

11. Agent selon l'une des revendications 1 à 10, **caractérisé en ce que** la communication entre le noyau protocolaire et au moins une méthode d'accès aux ressources en mode « direct » s'effectue par l'intermédiaire de tube nommé et de primitives exécutables permettant de réaliser les opérations de lecture de la valeur d'une instance "notifymeth" "readInstDirect" de modification d'une instance "notifymeth" "writeInstDirect", de lecture de l'instance suivante "notifymeth" "readNextDirect" d'écriture d'une nouvelle instance, et de suppression d'une instance.

12. Agent selon l'une des revendications 1 à 11, **caractérisé en ce que** la structure de chaque message, concernant une opération sur une instance de la ressource et construit par le noyau (111) protocolaire de l'agent à destination d'au moins une méthode (12) comprend, un champ d'identification de l'instance, un champ correspondant à la valeur de l'instance, un code identifiant l'opération à exécuter et un code de retour indiquant si l'opération a été effectuée.

13. Agent selon l'une des revendications 1 à 12, **caractérisé en ce que** l'administrateur (20) et/ou chaque méthode (12) peuvent créer une instance dans le modèle (11) de la ressource gérée par le noyau, par l'intermédiaire d'une requête envoyée au noyau (111) contenant le verbe SET, de modification d'une instance, sur une instance inexistante dans le modèle, la réception de cette requête par le noyau (111) provoquant la création de l'instance.

14. Agent selon l'une des revendications 1 à 13, **caractérisé en ce que** l'administrateur (20) et/ou chaque méthode (12) peuvent détruire une instance dans le modèle de la ressource gérée par le noyau (111) par l'intermédiaire d'une requête comportant le verbe de modification, SET, d'une instance, valorisant par le nom de l'instance à détruire, une instance prédéterminée et préexistante "notifymeth" "gamDeleteObject" du modèle (11) de la ressource (30), la réception de cette requête par le noyau (111) provoquant la destruction de l'instance.

15. Agent selon l'une des revendications 1 à 14, **caractérisé en ce que** le modèle (11) de la ressource (30) compris dans le noyau (111) est une base de données triées selon l'ordre lexicographique du protocole SNMP.

16. Agent selon l'une des revendications 1 à 15, **caractérisé en ce que** le modèle (11) de la ressource gérée par le noyau (111) est initialisé par un fichier d'instance (40) crée par l'utilisateur avant l'initialisation du noyau (111).

17. Agent selon l'une des revendications 1 à 16, **caractérisé en ce que** les modifications successives d'au moins une valeur d'instance du modèle de la ressource sont mémorisées dans un fichier (50) de sauvegarde d'une taille maximale déterminée.

18. Agent selon la revendication 17, **caractérisé en ce que** une fusion entre le fichier d'instance (40) et le fichier de sauvegarde (50) est effectuée avant l'initialisation du noyau ou lorsque le fichier de sauvegarde (50) a atteint la taille déterminée ou lorsque l'utilisateur le désire, pour d'une part créer un nouveau fichier d'instance (42) contenant les dernières valeurs des instances sauvegardées dans le fichier de sauvegarde, et d'autre part créer un fichier (52) de sauvegarde vide.

19. Agent selon l'une des revendications 17 à 18, **caractérisé en ce que**, les valeurs des instances enregistrées dans le fichier de sauvegarde (50) sont accessibles par un utilisateur avant la fusion avec le fichier d'instance (40).

20. Agent selon l'une des revendications 17 à 19, **caractérisé en ce que** chaque ligne du fichier de sauvegarde (50) correspond à une modification ou une suppression ou une création ou une écriture d'une instance, et comprend un champ contenant le nom de l'instance, un champ contenant la valeur de cette instance, et un champ contenant l'identification du type d'opération effectuée sur cette instance.

21. Agent selon la revendication 18, **caractérisé en ce qu'**avant la fusion du fichier d'instance avec le fichier de sauvegarde, ces deux fichiers sont dupliqués sur le disque dur de la ressource.

22. Librairie d'outils de création d'un agent de communication entre un administrateur et au moins une ressource d'un système informatique, comprenant une commande qui, à partir d'une description formalisée de la ressource, créé sous la forme d'un programme exécutable, un noyau (111) protocolaire de l'agent (10) de communication gérant la ressource (30), **caractérisé en ce que**, lorsque l'administrateur (20) envoie dans une même requête une opération de modification, SET, sur une liste d'instances, le noyau (111) transmet un à un des messages de modification, SET, d'instance vers au moins une méthode (12) correspondant à chaque instance, un dernier message, SETLAST, de modification de la dernière instance étant transmis en indiquant qu'il s'agit de la dernière instance de la liste ;
et **en ce que** tant que ladite au moins une méthode (12) ne reçoit pas le dernier message du noyau (111), les modifications des instances sont mémorisées sans être validées, et dès que le dernier message, SETLAST, est reçu par ladite au moins une méthode (12), si toutes les modifications des instances sont possibles, celles-ci sont toutes validées, alors qu'elles sont toutes annulées dans le cas contraire.

23. Librairie selon la revendication 22, **caractérisée en ce qu'**elle comprend au moins une fonction d'aide au développement permettant à l'utilisateur de développer des méthodes (12) de la ressource capables de communiquer avec le noyau (111) protocolaire et/ou de mettre à jour au moins une instance du modèle (11) de la ressource (30) et/ou de lire au moins une instance du modèle (11) de la ressource (30).

24. Procédé de communication entre un administrateur et au moins une ressource mettant en oeuvre l'agent défini par l'une des revendications 1 à 21, **caractérisé en ce qu'**il comprend :
une première étape d'envoi d'une requête de l'administrateur (20) vers la ressource (30) pour lire une information de la ressource (30), et
une deuxième étape de décodage de la requête par le noyau (111) de l'agent (10) pour déterminer l'instance correspondant à l'information désirée et le mode d'obtention de cette instance.

25. Procédé selon la revendication 24, **caractérisé en ce que** si le mode d'obtention de l'instance est le mode « direct », le noyau de l'agent construit, puis envoie une requête de réponse à l'administrateur en donnant la valeur de l'instance existante dans le modèle de la ressource qu'il gère.

26. Procédé selon la revendication 25, **caractérisé en ce que** si le mode d'obtention de l'instance est le mode « signal », le noyau de l'agent construit puis envoie un message vers la méthode correspondant à l'instance pour obtenir la valeur de l'instance.

27. Système informatique incluant un administrateur, au moins une ressource et un agent de communication entre l'administrateur et la ressource, **caractérisé en ce que** l'agent est défini par l'une des revendications 1 à 21.

## Claims

1. Communication agent between an administrator (20) and at least one resource (30) of a computer system, comprising a protocol core (111) created automatically from a formal description of the resource (30), this core (111) once created comprising, in compiled form, a first communication interface (14) with the administrator (20) and a model (11) of the resource (30) comprising at least one value of at least one instance of the resource (30), said at least one value being able to be accessed by the administrator (20) through the intermediary of the first communication interface (14), **characterized in that**, when the administrator (20) transmits in a same request a modification operation, SET, on a list of instances, the core (111) transmit one by one instance modification messages, SET, to at least one method (12) corresponding to each instance said method being comprised in a second interface of the core, a last message, SETLAST, of modification of the last instance being transmitted indicating that it concerns the last instance of the list, and **in that** while said at least one method (12) does not receive the last message from the core (111), the modifications of the instances are memorized without being validated, and as soon as the last message, SETLAST, is received by said at least one method (12), if all the modifications of instances are possible, they are all validated, while they are are all cancelled in the contrary case.

2. Agent according to claim 1, **characterized in that** it comprises in a second interface (13) at least one access method (12) to the resource (30) to communicate with the protocol core (111) and update and/or read at least one value of an instance of the model (11) of the resource specific to the method (12), and to respond to requests from the core (111) relating to the update of at least one instance value of the model of the resource.

3. Agent according to claim 2, **characterized in that** the resource being modelled in the form of attributes, the access of each attribute managed by the agent can be obtained in either a "direct" or a "signal" mode, defined in a configuration file, for example <agt>.confget

4. Agent according to claim 3, **characterized in that** the configuration file comprises, when the access method uses socket interface primitives, an identifier of the method that is associated with the instance.

5. Agent according to one of claims 1 to 4, **characterized in that** the formal description of the resource is in the form of an MIB, Management Information Base, and the model (11) of the resource comprises a sorted data base constructed from the formal description of the resource.

6. Agent according to one of claims 1 to 5, **characterized in that** the protocol core (111) comprises a compiled file containing sorted data (115) for the administration of objects specific to its operation.

7. Agent according to one of claims 1 to 6, **characterized in that** the communication between the administrator and the protocol node is carried out according to the SNMP, Simple Network Management Protocol protocol, ASN1, Abstract Syntax Notation One, by the intermediary of verbs enabling the read operations of an instance, GET, of the read operation of the next instance, GET-NEXT, and of modification of an instance, SET.

8. Agent according to one of claims 1 to 7, **characterized in that** the communication between the method (12) and the core (111) is carried out by the intermediary of connected TCP/IP communication applications.

9. Agent according to one of claims 1 to 8, **characterized in that** the communication between the protocol core (111) and at least one method (12) of access to the resources (30) in mode "socket" is carried out by the intermediary of two TCP/IP connection processes that communicate by sockets executable primitives enabling read operations of the value of an instance, "readInstSock", of modification of an instance for example "writeInstSock" of reading of the next instance for example "readNextSock" of writing of a new instance instance, and suppression of an instance.

10. Agent according to one of claims 1 to 9, **characterized in that** the communication between two methods (12) of access to the resources (30) in mode "sockets" is carried out by calling on a function such as "notifymeth"

11. Agent according to one of claims 1 to 10, **characterized in that** the communication between the protocol core and at least one method of access to the resources in mode "direct" is carried out by intermediary of a named pipe and the executable primitives enabling the read operations of the value of an instance for example "readInstDirect", of modification of an instance for example "writelnstDirect", of reading of a next instance for example "readNextDirect" of writing of a new instance, and of suppression of an instance.

12. Agent according to one of claims 1 to 11, **characterized in that** the structure of each message, relating to an operation on an instance of the resource and constructed by the protocol core (111) of the agent destined for at least one method (12) comprises, an instance identification field, a field corresponding to the value of the instance, a code identifying the operation to be executed and a return code indicating if the operation has been carried out.

13. Agent according to one of claims 1 to 12, **characterized in that** the administrator (20) and/or each method (12) can create an instance in the model (11) of the resource managed by the core, by the intermediary of a request transmitted to the core (111) containing the verb, SET, of modification of an instance, on a non-existant instance in the model, the reception of this request by the core (111) provoking the creation of the instance.

14. Agent according to one of claims 1 to 13, **characterized in that** the administrator (20) and/or each method (12) can destroy an instance in the model of the resource managed by the core (111) by the intermediary of a request comprising the modification verb, SET, of an instance, assigning to the name of the instance to be destroyed, a pre-determined and pre-existing instance for example "gamDeleteObject" of the model (11) of the resource (30), the reception of this request by the core (111) provoking the destruction of the instance.

15. Agent according to one of claims 1 to 14, **characterized in that** the model (11) of the resource (30) comprised in the core (111) is a sorted data base according to the lexicographical order of the SNMP protocol.

16. Agent according to one of claims 1 to 15, **characterized in that** the model (11) of the resource managed by the core (111) is initialized by an instance file (40) created by the user prior to the initialization of the core (111).

17. Agent according to one of claims 1 to 16, **characterized in that** the successive modifications of at least one instance value of the model of the resource is memorized in a backup file (50) of a determined maximum size.

18. Agent according to claim 17, **characterized in that** a merging of the instance file (40) and the backup file (50) is carried out prior to the initialization of the core or when the backup file (50) has attained the determined size or when the user wants it, on one hand to create a new instance file (42) containing the latest values of instances saved in the backup file, and on the other hand to create an empty storage file (52).

19. Agent according to one of claims 17 or 18, **characterized in that**, the values of instances recorded in the backup file (50) can be accessed by a user prior to the merge with the instance file (40).

20. Agent according to one of claims 17 to 19, **characterized in that** each line of the backup file (50) corresponds to a modification or a deletion or a creation or a writing of an instance, and comprises a field containing the instance name, a field containing the value of this instance, and a field containing the identification of the operation type carried out on this instance.

21. Agent according to claim 18, **characterized in that** prior to the merging of the instance file with the backup file, these two files are duplicated on the hard disk of the resource.

22. Library of tools for creation of a communication agent between an administrator and at least one computer system resource, comprising a command that, from a formal description of the resource, creates in the form of a programme that can be executed, a protocol core (111) of the communication agent (10) managing the resource (30), **characterized in that**, when the administrator (20) transmits in a same request a modification operation, SET, on a list of instances, the core (111) transmits one by one the instance modification messages, SET, to at least one method (12) corresponding to each instance, a last message, SETLAST, of modification of this last instance being transmitted indicating that it relates to the last instance of the list,
and **in that** as long as said at least one method (12) does not receive this last message from the core (111), the modifications of instances are memorized without being validated, and as soon as the last message, SETLAST, is received by said at least one method (12), if all the modifications of instances are possible, they are all validated, while they are all cancelled in the contrary case.

23. Library according to claim 22, **characterized in that** it comprises at least one development help function enabling the user to develop methods (12) of the resource able to communicate with the protocol core (111) and/or to update at least one instance of the model (11) of the resource (30) and/or to read at least one instance of the model (11) of the resource (30).

24. Communication method between an administrator and at least one resource implementing the agent defined by one of claims 1 to 21, **characterized in that** it comprises: a first step of transmission of a request from the administrator (20) to the resource (30) to read an item of information of the resource (30), and
a second step of decoding of the request by the core (111) of the agent (10) to determine the instance corresponding to the required information and the mode of obtaining this instance.

25. Method according to claim 24, **characterized in that** if the mode for obtaining the instance is the "direct" mode, the core of the agent constructs, then transmits a request for a response to the administrator providing the value of the existing instance in the model of the resource that it manages.

26. Method according to claim 25, **characterized in that** if the mode for obtaining the instance is the "signal" mode, the core of the agent constructs, then transmits a message to the method corresponding to the instance to obtain the value of the instance.

27. Computer system including an administrator at least one resource and a communication agent between the administrator and the resource, **characterized in that** the agent is defined by one of claims 1 to 21.

## Patentansprüche

1. Agent für die Kommunikation zwischen einem Administrator (20) und mindestens einem Betriebsmittel (30) eines Rechnersystems, mit einem Protokollkern (111), der automatisch aufgrund einer formalisierten Beschreibung des Betriebsmittels (30) erstellt wird, wobei dieser Kern (111), wenn er erstellt ist, in kompilierter Form eine erste Schnittstelle (14) für die Kommunikation mit dem Administrator (20) umfasst und ein Modell (11) des Betriebsmittels (30) mindestens einen Wert mindestens einer Instanz des Betriebsmittels (30) umfasst, wobei der mindestens eine Wert für den Administrator (20) über die erste Kommunikationsschnittstelle (14) zugänglich ist, **dadurch gekennzeichnet, dass**, wenn der Administrator (20) in ein und derselben Anfrage eine Änderungsoperation SET auf einer Liste von Instanzen sendet, der Kern (111) Instanzänderungsmeldungen SET einzeln zu mindestens einer jeder Instanz entsprechenden Methode (12) überträgt, wobei die Methode in einer zweiten Schnittstelle des Kerns enthalten ist, wobei eine letzte Meldung SETLAST über die Änderung der letzten Instanz übertragen wird mit der Angabe, dass es sich um die letzte Instanz der Liste handelt, und dass, solange die mindestens eine Methode (12) die letzte Meldung des Kerns (111) nicht empfängt, die Änderungen der Instanzen gespeichert werden, ohne validiert zu werden, und sobald die letzte Meldung SETLAST von der mindestens einen Methode (12) empfangen wird, wenn alle Änderungen der Instanzen möglich sind, diese alle validiert werden und anderenfalls alle annulliert werden.

2. Agent nach Anspruch 1, **dadurch gekennzeichnet, dass** er in einer zweiten Schnittstelle (13) mindestens eine Methode (12) für den Zugang zum Betriebsmittel (30) umfasst, um mit dem Protokollkern (111) zu kommunizieren und mindestens einen Wert einer Instanz des Modells (11) des für die Methode (12) spezifischen Betriebsmittels zu aktualisieren und/oder zu lesen und um auf die Anfragen des Kerns (111) bezüglich der Aktualisierung mindestens eines Werts einer Instanz des Betriebsmittelmodells zu antworten.

3. Agent nach Anspruch 2, **dadurch gekennzeichnet, dass** das Betriebsmittel in Form von Attributen modelliert wird, wobei der Zugang jedes von dem Agenten verwalteten Attributs in einem Modus, entweder "Direkt" oder "Signal", der in einer Konfigurationsdatei beispielsweise <agt>.confget definiert ist, erreicht werden kann.

4. Agent nach Anspruch 3, **dadurch gekennzeichnet, dass** die Konfigurationsdatei, wenn die Zugangsmethode Socket-Schnittstellenprimitive verwendet, eine Methodenkennung aufweist, die der Instanz zugeordnet ist.

5. Agent nach einem der Ansprüche 1 bis 4, **dadurch gekennzeichnet, dass** die formalisierte Beschreibung des Betriebsmittels sich als eine MIB-Basis, Management Information Base, darstellt und das Modell (11) des Betriebsmittels eine Bank von sortierten Daten umfasst, die aufgrund der formalisierten Beschreibung des Betriebsmittels erstellt wird.

6. Agent nach einem der Ansprüche 1 bis 5, **dadurch gekennzeichnet, dass** der Protokollkern (111) eine kompilierte Datei mit sortierten Daten (115) für die Verwaltung der für sein Funktionieren spezifischen Objekte umfasst.

7. Agent nach einem der Ansprüche 1 bis 6, **dadurch gekennzeichnet, dass** die Kommunikation zwischen dem Administrator und dem Protokollkern gemäß dem Simple-Network-Management-Protokoll SNMP, Abstract Syntax Notation One ASN1, über Verben erfolgt, die die Operationen des Lesens eines Instanz GET, des Lesens der folgenden Instanz GET-NEXT und der Änderung einer Instanz SET ermöglicht.

8. Agent nach einem der Anspruche 1 bis 7, **dadurch gekennzeichnet, dass** die Kommunikation zwischen der Methode (12) und dem Kern (111) über verbundene TCP/IP-Kommunikationssoftwares erfolgt.

9. Agent nach einem der Ansprüche 1 bis 8, **dadurch gekennzeichnet, dass** die Kommunikation zwischen dem Protokollkern (111) und mindestens einer Methode (12) für den Zugang zu den Betriebsmitteln (30) im "Socket"-Modus über zwei Verbindungsprozesse TCP/IP erfolgt, die über ausführbare Socket-Primitive kommunizieren, welche die Durchführung der Operationen des Lesens des Werts einer Instanz "readInstSock", des Änderns einer Instanz beispielsweise "writeInstSock", des Lesens beispielsweise der folgenden Instanz beispielsweise "readNextSock", des Schreibens einer neuen Instanz und des Löschens einer Instanz ermöglichen.

10. Agent nach einem der Ansprüche 1 bis 9, **dadurch gekennzeichnet, dass** die Kommunikation zwischen zwei Methoden (12) für den Zugang zu den Betriebsmitteln (30) im "Socket"-Modus durch Aufrufen einer Funktion beispielsweise "notifymeth" erfolgt.

11. Agent nach einem der Ansprüche 1 bis 10, **dadurch gekennzeichnet, dass** die Kommunikation zwischen dem Protokollkern und mindestens einer Methode für den Zugang zu den Betriebsmitteln im "Direkt"-Modus über benannte Pipes und ausführbare Primitive erfolgt, welche die Durchführung der Operationen des Lesens des Werts einer Instanz beispielsweise "readInstDirect", des Änderns einer Instanz beispielsweise "writeInstDirect", des Lesens der folgenden Instanz beispielsweise "readNextDirect", des Schreibens einer neuen Instanz und des Löschens einer Instanz ermöglichen.

12. Agent nach einem der Ansprüche 1 bis 11, **dadurch gekennzeichnet, dass** die Struktur jeder Meldung, die eine Operation auf einer Instanz des Betriebsmittels betrifft und durch den Protokollkern (11) des Agenten für mindestens eine Methode (12) erstellt wird, ein Feld für die Identifizierung der Instanz, ein Feld, das dem Wert der Instanz entspricht, einen Code, der die auszuführende Operation identifiziert und einen Rück-Code, der anzeigt, ob die Operation durchgeführt wurde, umfasst.

13. Agent nach einem der Ansprüche 1 bis 12, **dadurch gekennzeichnet, dass** der Administrator (20) und/oder jede Methode (12) eine Instanz in dem Modell (11) des von dem Kern verwalteten Betriebsmittels über eine an den Kern (111) gesendete, das Verb SET für die Änderung einer Instanz enthaltende Anfrage bezüglich einer in dem Modell nicht vorhandenen Instanz erstellen können, wobei der Empfang dieser Anfrage durch den Kern (111) das Erstellen der Instanz bewirkt.

14. Agent nach einem der Ansprüche 1 bis 13, **dadurch gekennzeichnet, dass** der Administrator (20) und/oder jede Methode (12) eine Instanz in dem Modell des von dem Kern (111) verwalteten Betriebsmittels über eine das Verb für die Änderung SET einer Instanz aufweisende Anfrage löschen können, wobei der Name der zu löschenden Instanz einer vorbestimmten und vorexistierenden Instanz beispielsweise "gamDeleteObject" des Modells (11) des Betriebsmittels (30) zugewiesen wird, wobei der Empfang dieser Anfrage durch den Kern (111) die Löschung der Instanz bewirkt.

15. Agent nach einem der Ansprüche 1 bis 14, **dadurch gekennzeichnet, dass** es sich bei dem in dem Kern (111) enthaltenen Modell (11) des Betriebsmittels (30) um eine Bank von Daten handelt, die in der lexikographischen Reihenfolge des SNMP-Protokolls sortiert sind.

16. Agent nach einem der Ansprüche 1 bis 15, **dadurch gekennzeichnet, dass** das Modell (11) des von dem Kern (111) verwalteten Betriebsmittels durch eine Instanzdatei (40) initialisiert wird, die durch den Benutzer vor der Initialisierung des Kerns (111) erstellt wird.

17. Agent nach einem der Ansprüche 1 bis 16, **dadurch gekennzeichnet, dass** die sukzessiven Änderungen mindestens eines Instanzwerts des Betriebsmittelmodells in einer Sicherungsdatei (50) mit einer bestimmten Maximalgröße gespeichert werden.

18. Agent nach Anspruch 17, **dadurch gekennzeichnet, dass** eine Fusion zwischen der Instanzdatei (40) und der Sicherungsdatei (50) vor der Initialisierung des Kerns erfolgt oder wenn die Sicherungsdatei (50) die bestimmte Größe erreicht hat oder wenn der Benutzer es wünscht, um zum einen eine neue Instanzdatei (42), welche die letzten Werte der in der Sicherungsdatei gesicherten Instanzen enthält, zu erstellen und zum anderen um eine leere Sicherungsdatei (52) zu erstellen.

19. Agent nach einem der Ansprüche 17 bis 18, **dadurch gekennzeichnet, dass** die Werte der Instanzen, die in der Sicherungsdatei (50) gespeichert sind, für einen Benutzer vor der Fusion mit der Instanzdatei (40) zugänglich sind.

20. Agent nach einem der Ansprüche 17 bis 19, **dadurch gekennzeichnet, dass** jede Zeile der Sicherungsdatei (50) einer Änderung oder einer Löschung oder einer Erstellung oder einem Schreiben einer Instanz entspricht und ein Feld mit dem Namen der Instanz, ein Feld mit dem Wert dieser Instanz und ein Feld mit der Identifizierung der Typs der auf dieser Instanz durchgeführten Operation umfasst.

21. Agent nach Anspruch 18, **dadurch gekennzeichnet, dass** vor der Fusion der Instanzdatei mit der Sicherungsdatei diese beiden Dateien auf der Festplatte des Betriebsmittels dupliziert werden.

22. Bibliothek von Werkzeugen für die Erstellung eines Agenten für die Kommunikation zwischen einem Administrator und mindestens einem Betriebsmittel eines Rechnersystems, mit einer Steuerung, die aufgrund einer formalisierten Beschreibung des Betriebsmittels in Form eines ausführbaren Programms einen das Betriebsmittel (30) verwaltenden Protokollkern (111) des Kommunikationsagenten (10) erstellt, **dadurch gekennzeichnet, dass**, wenn der Administrator (20) in ein und derselben Anfrage eine Änderungsoperation SET auf einer Liste von Instanzen sendet, der Kern (111) Instanzänderungsmeldungen SET einzeln zu mindestens einer jeder Instanz entsprechenden Methode (12) überträgt, wobei eine letzte Meldung SETLAST über die Änderung der letzten Instanz übertragen wird mit der Angabe, dass es sich um die letzte Instanz der Liste handelt, und dass, solange die mindestens eine Methode (12) die letzte Meldung des Kerns (111) nicht empfängt, die Änderungen der Instanzen gespeichert werden, ohne validiert zu werden, und sobald die letzte Meldung SETLAST von der mindestens einen Methode (12) empfangen wird, wenn alle Änderungen der Instanzen möglich sind, diese alle validiert werden und anderenfalls alle annulliert werden.

23. Bibliothek nach Anspruch 22, **dadurch gekennzeichnet, dass** sie mindestens eine Entwicklungshilfe-Funktion umfasst, die es dem Benutzer ermöglicht, Methoden (12) des Betriebsmittels zu entwickeln, die fähig sind, mit dem Protokollkern (111) zu kommunizieren und/oder mindestens eine Instanz des Modells (11) des Betriebsmittels (30) zu aktualisieren und/oder mindestens eine Instanz des Modells (11) des Betriebsmittels (30) zu lesen.

24. Verfahren für die Kommunikation zwischen einem Administrator und mindestens einem Betriebsmittel, welches den durch einen der Ansprüche 1 bis 21 definierten Agenten einsetzt, **dadurch gekennzeichnet, dass** es Folgendes umfasst:
- einen ersten Schritt des Sendens einer Anfrage des Administrators (20) an das Betriebsmittel (30), um eine Information des Betriebsmittels (30) zu lesen und
- einen zweiten Schritt des Decodierens der Anfrage durch den Kern (111) des Agenten (10), um die Instanz, die der gewünschten Information entspricht, und der Modus, nach dem diese Instanz erzielt wird, zu bestimmen.

25. Verfahren nach Anspruch 24, **dadurch gekennzeichnet, dass**, wenn es sich bei dem Modus der Erzielung der Instanz um den "Direkt"-Modus handelt, der Kern des Agenten eine Antwort erstellt und danach an den Administrator sendet und dabei den Wert der Instanz angibt, die in dem Modell des von ihm verwalteten Betriebsmittels vorhanden ist.

26. Verfahren nach Anspruch 25, **dadurch gekennzeichnet, dass**, wenn es sich bei dem Modus der Erzielung der Instanz um den "Signal"-Modus handelt, der Kern des Agenten eine Meldung erstellt und danach an die Methode sendet, die der Instanz entspricht, um den Wert der Instanz zu erhalten.

27. Rechnersystem umfassend einen Administrator, mindestens ein Betriebsmittel und einen Agenten für die Kommunikation zwischen dem Administrator und dem Betriebsmittel, **dadurch gekennzeichnet, dass** der Agent durch einen der Ansprüche 1 bis 21 definiert ist.
